(19) Europäisches Patentamt
European Patent Office
Office européen des brevets

(11) EP 4 653 969 A1

(12) EUROPEAN PATENT APPLICATION
published in accordance with Art. 153(4) EPC

(43) Date of publication:
26.11.2025 Bulletin 2025/48

(51) International Patent Classification (IPC):
G05B 23/02 (2006.01)

(21) Application number: 24815079.9

(22) Date of filing: 30.04.2024

(52) Cooperative Patent Classification (CPC):
G05B 23/02

(86) International application number:
PCT/JP2024/016704

(87) International publication number:
WO 2024/247595 (05.12.2024 Gazette 2024/49)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 31.05.2023 JP 2023090509

(71) Applicant: Hitachi, Ltd.
Tokyo 100-8280 (JP)

(72) Inventors:
• KONO, Yohei
Tokyo 100-8280 (JP)
• MOCHIZUKI, Yoshinori
Tokyo 100-8280 (JP)
• OTSU, Tomohiro
Tokyo 100-8280 (JP)

(74) Representative: Manitz Finsterwald
Patent- und Rechtsanwaltspartnerschaft mbB
Martin-Greif-Straße 1
80336 München (DE)

(54) DESIGN ASSISTANCE SYSTEM AND DESIGN ASSISTANCE METHOD

(57) A design assistance system 1 that calculates values representing the state ununiformity in a spatial area on the basis of information about a state at each position in a case where a process has been performed on raw materials distributed in the spatial area, generates a state distribution model 108 that outputs data representing the state ununiformity after the process on the basis of the values, acquires values of data representing the state ununiformity after the process by inputting set values of process design parameters to the state distribution model 108, acquires a quality parameter of a deliverable by inputting each piece of data identified from the values of the data, the identified data representing a possible state , to the quality prediction model 105, and changes the values of the process design parameters, on the basis of each quality parameter, such that the quality of a deliverable falls within a predetermined range.

F I G . 1

**Description**

Technical Field

The present invention relates to a design assistance system and a design assistance method.

Background Art

=== Incorporation by Reference ===

The present application claims priority to Japanese Patent Application No. 2023-090509 filed on May 31, 2023, the content of which is incorporated herein by reference.

In the chemistry industry and the materials industry, technological examinations are performed step by step from the start of product development to mass-production. Specifically, typically, examinations progress through four phases: (1) laboratory experiments, (2) bench tests, (3) pilot plant tests, and (4) full-scale plant design and operation. In laboratory experiments, trial manufacturing is performed at the beaker level while raw material combinations and various types of reaction condition are changed, and the basic physical properties and yield of a product are decided. In bench tests, a small-scale apparatus that manufactures the product obtained in the laboratory experiments is assembled, and the design of various types of unit operation and process, such as distillation or adsorption, and the investigation and design of specific physical properties are performed. In pilot plant tests, a pilot plant of a scale close to a full-scale plant is constructed, and the decision of operating conditions, the decision of operation methods, the design of an instrumentation system, and the like are performed. In full-scale plant design, the design and operation of the plant are performed on the basis of a technology established at the pilot plant. Note that bench tests and pilot tests are integrated into other phases, in some cases.

The specifications of apparatuses, facilities, manufacturing processes, and the like are significantly different between such phases. For example, if a manufacturing process is a reaction process, as the phases progress by one, the reactor volume can increase by tens to hundreds of times.

Accordingly, depending on differences in specifications between phases, there may be lead to a situation where the desired quality (physical properties or yield) cannot be obtained. A specific example is explained using a reaction process as an example. First, when the reactor volume increases, the surface area per unit volume can decrease to lower the efficiency of heat transfer from the outside, or the surface area per unit volume in contact with an agitator blade can decrease to lower the agitation efficiency. As a result, the heat transfer delays, and inconsistencies in temperature or concentration increase. Typically, reaction rates depend on temperature and the concentration of each material, and the ratio of byproducts and the distribution of physical properties differ depending on reaction rates. Accordingly, it is necessary to design specifications such as the reactor size and the agitator blade shape and operating conditions such as the time profile of the reaction temperature, while taking into consideration changes in physical properties or the yield due to heat transfer delays or inconsistencies in temperature or concentration described above. The design task for each specification according to the progression of phases like this is collectively called scale-up.

Scale-up is a time-consuming task. For example, in a case where reaction conditions devised in laboratory experiments cannot be reproduced in bench tests, it becomes necessary to re-design physical properties or the yield in laboratory experiments, and this causes significant setbacks. In addition, in pilot plant tests, the capacity is large, and the manufacturing time is long. This necessitates a work period of six months or as long as one and a half years, in some cases. Because of this, scale-up has become a bottleneck in product development for chemical manufacturers, materials manufacturers, and the like.

As a technology for efficiently performing scale-up, for example, Non-Patent Document 1 discloses a method of optimizing operating conditions of a plant with the number of times of experiments as few as possible immediately after the production at full-scale plant manufacturing facility has been started after examinations in pilot plant tests have been ended, and enabling the manufacturing of desired products. Specifically, in the disclosed scheme, transfer learning and Gaussian process regression are used in combination to thereby construct a model (quality prediction model) that predicts the mean and variation of quality from operating conditions, and experiments are executed under conditions that may increase an objective function while taking the variation into consideration, and thus favorable quality is achieved with a small number of times of experiments.

Prior Art Document

Non-Patent Document

Non-Patent Document 1: Manabu KANO, Ryosuke YOSHIZAKI, Combined Task Bayesian Optimization for Scale-Up of Manufacturing Process, Chemical engineering of Japan 80 (12), 769-772, 2016

Summary of the Invention

Problem to be Solved by the Invention

In Non-Patent Document 1, the numbers of outputs from the quality prediction model are required to be the same between a pilot plant and a full-scale plant. That is, the numbers of KPIs and their constituent elements targeted for optimization need to be the same between before and after scale-up. However, the numbers of KPIs and their constituent elements are often different between at the time of laboratory tests and after the scale-up. For example, in bench apparatuses, pilot plants, and full-scale plants, it is necessary to optimize yield while taking into consideration each item of heat transfer delays and inconsistencies in temperature or concentration, but, in laboratory tests, these are typically not included in examined items. In addition, quality factors are examined as univariate in laboratory tests; however, a case is also conceivable where, at the scale of bench apparatus, pilot plant, or full plant scale, a plurality of statistical metrics (mean, maximum value, minimum value, etc.) related to quality factors are optimized. In cases like this, the scheme of Non-Patent Document 1 cannot be applied.

In addition, as an approach different from that in Non-Patent Document 1, it is also possible to adopt a scheme in which first-principle simulations at the plant scale (coupling simulations of fluid and reaction for reaction processes, kneading simulations for extrusion processes, etc.) are performed, internal states like concentration and temperature within the processes are estimated finely, and quality is estimated on the basis of these results. However, since the above-described simulations require enormous computational load, it is difficult to repeat trials while changing equipment specifications and conditions such as operating conditions or to perform simulations of all time periods from the start to the end of manufacturing.

In this manner, it has been difficult to construct a mechanism by which products with stable quality can be obtained at a full-scale plant by using data obtained in laboratory tests to efficiently grasp the quality and yield at bench tests, pilot plants, or full-scale plants.

The present invention has been made in view of such a background, and an object thereof is to provide a design assistance system and a design assistance method that enable process design for obtaining deliverables with appropriate quality in processes of generating deliverables that are implemented at different scales.

Means for Solving the Problem

One aspect of the present invention for solving the problem is a design assistance system including a storage apparatus that stores a quality prediction model that receives input of data representing a state and data representing a process to be performed on a raw material in the state and outputs data representing quality of a deliverable obtained from the raw material after the process, and a control apparatus that executes: a state distribution model construction process of acquiring information about a state at each position in a spatial area in a case where a process has been performed on a raw material distributed in the spatial area, calculating a value representing state ununiformity in the spatial area on the basis of each acquired piece of information, and, on the basis of the calculated value representing the ununiformity and data defining the process, generating a state distribution model that receives input of a process design parameter which is data defining a process to be performed on a raw material existing in a spatial area, and output data representing state ununiformity in the spatial area during or after execution of the process; a state distribution model execution process of setting a value of the process design parameter, and acquiring a value of data representing state ununiformity in a spatial area related to the process design parameter to which the value has been set, during or after execution of a process represented by the set value of the process design parameter, by inputting the set value of the process design parameter to the state distribution model; a manufacturing quality prediction process of identifying a plurality of possible states in the spatial area from the acquired value of the data representing the state ununiformity in the spatial area, and acquiring a quality parameter of a deliverable obtained from the raw material after the process represented by the set value of the process design parameter, by inputting, for each of the identified states, each piece of data representing the state and the set value of the process design parameter to the quality prediction model; and a parameter exploration process of changing the set value of the process design parameter, on the basis of each of the acquired quality parameters, such that the quality of the deliverable obtained from the raw material falls within a predetermined range.

Advantages of the Invention

The present invention enables process design for obtaining deliverables with appropriate quality in processes of generating deliverables that are implemented at different scales.

Configurations, advantages, and the like other than those described above are made clear by the following explanation of an embodiment.

## Brief Description of the Drawings

[FIG. 1] FIG. 1 is a figure depicting an example of the configuration of a design assistance system in the present embodiment.
[FIG. 2] FIG. 2 is a figure depicting an example of laboratory experiment data.
[FIG. 3] FIG. 3 is a figure depicting an example of the configuration of a plant experiment.
[FIG. 4] FIG. 4 is a figure depicting an example of plant experiment data obtained by the plant experiment.
[FIG. 5] FIG. 5 is a figure depicting an example of CAE simulation data.
[FIG. 6] FIG. 6 is a figure depicting an example of a state distribution model database.
[FIG. 7] FIG. 7 is a figure depicting an example of hardware included in an information processing apparatus included in the design assistance system.
[FIG. 8] FIG. 8 is a flow chart for explaining an example of a process design parameter decision first process.
[FIG. 9] FIG. 9 is a figure depicting an example of a state distribution model construction screen.
[FIG. 10] FIG. 10 is a flow chart for explaining details of a state distribution model construction process.
[FIG. 11] FIG. 11 is a flow chart for explaining details of a state distribution generation process.
[FIG. 12] FIG. 12 is a flow chart for explaining details of a manufacturing quality prediction process.
[FIG. 13] FIG. 13 is a flow chart for explaining details of a process exploration process.
[FIG. 14] FIG. 14 is a figure depicting an example of a process exploration screen.
[FIG. 15] FIG. 15 is a flow chart for explaining details of a state distribution model regeneration process.
[FIG. 16] FIG. 16 is a figure depicting an example of manufacturing achievement data.
[FIG. 17] FIG. 17 is a flow chart for explaining an example of a process design parameter decision second process.

## Modes for Carrying Out the Invention

Hereinbelow, an embodiment of the present invention is explained with reference to the figures. The following description and figures depict examples for explaining the present disclosure, and omission and simplification are made as appropriate for clarification of the explanation. The present disclosure can be implemented also in other various modes. Unless there is a particular limitation, there are no problems even if the number of each constituent element is one or greater than one.

A design assistance system according to the present embodiment is used in a case where, for the development and manufacturing of products (deliverables; for example, resins or fibers) manufactured by performing predetermined processes (physical or chemical processes) on raw materials, small-scale experiments (e.g. small-scale trial manufacturing at the level of beakers having spatial areas where small-scale processes are executed, like laboratory experiments; hereinbelow, small-scale experiments are called laboratory experiments in some cases) and large-scale tests (large-scale tests or manufacturing of products with large-scale apparatuses having spatial areas where large-scale processes are executed, like bench tests, pilot plant tests, or full-scale plant design (operation); hereinbelow, large-scale manufacturing is called plant experiments in some cases) are implemented.

Specifically, first, the design assistance system constructs a state distribution model to calculate values (the mean and variance in a case where internal states of a spatial area having a predetermined size where processes are executed are treated as random variables in the present embodiment) representing the ununiformity of the distribution (the spatial distribution of elements such as temperature that affect the quality of deliverables) of the internal states, on the basis of result data of plant experiments (large-scale tests) actually implemented or data (hereinbelow, called CAE (Computer Aided Engineering) simulation data) obtained by executing coupling simulations (hereinbelow, also called a spatial process model) using a coupled model described later. The state distribution model outputs values of the distribution of internal states of a spatial area in the manufacturing of products at various scales (with various apparatus sizes or under various operating conditions). It should be noted that the amount of data obtained by plant experiments or coupling simulations in this case is allowed to be small.

Furthermore, the design assistance system constructs in advance a quality prediction model to predict the quality (hardness, etc.) of products obtained from raw materials on the basis of actual data of actually-performed laboratory experiments (small-scale experiments) that have been implemented at scales that are small to such an extent that the distribution of internal states like the ones described above do not need to be taken into consideration.

The design assistance system sets the content of external conditions (e.g. the sizes or shapes of apparatuses at the plant, agitation conditions, or operating conditions of the plant; hereinbelow, called process design parameter) of a large-scale test, and, by inputting the set process design parameters to the state distribution model, outputs values (the mean and variance in a case where internal states of the plant in the large-scale test are treated as random variables in the present embodiment) representing the ununiformity or range of the distribution of the internal states of the plant in the large-scale test. Then, the design assistance system 1 samples state values (temperature values) on the basis of the ununiformity values, and, by inputting each of the sampled values and corresponding process design parameters to the quality prediction model, predicts the quality of products manufactured in the states (temperatures) and with the process design parameters.

Here, since original data on values to be input to the quality prediction model is random variables as described above, values of the product quality respectively output (predicted) from the quality prediction model are output as values similarly assumed to represent quality variations corresponding to the random variables. Thereby, it becomes possible to grasp deviations and variations in product quality at the time of the scale-up from small-scale experiments to large-scale tests. That is, the design assistance system can explore such process design parameters with which the quality of manufactured products falls within a predetermined range and which satisfy plant constraints and the like, while taking into consideration variations in prediction values of the quality of products manufactured in the large-scale tests.

Note that, hereinbelow, processes to be performed on raw materials are reaction processes; however, the present invention can be applied to a wide range of processes including other types of process like other physical processes (mixing processes, etc.). For example, the processes may be manufacturing processes of continuous materials for manufacturing chemicals, drugs, steel, or the like. In addition, the processes may be processes involving equipment or facilities for which grasping internal states is important, like energy plants for thermal power generation or the like.

<Configuration of Design Assistance System>

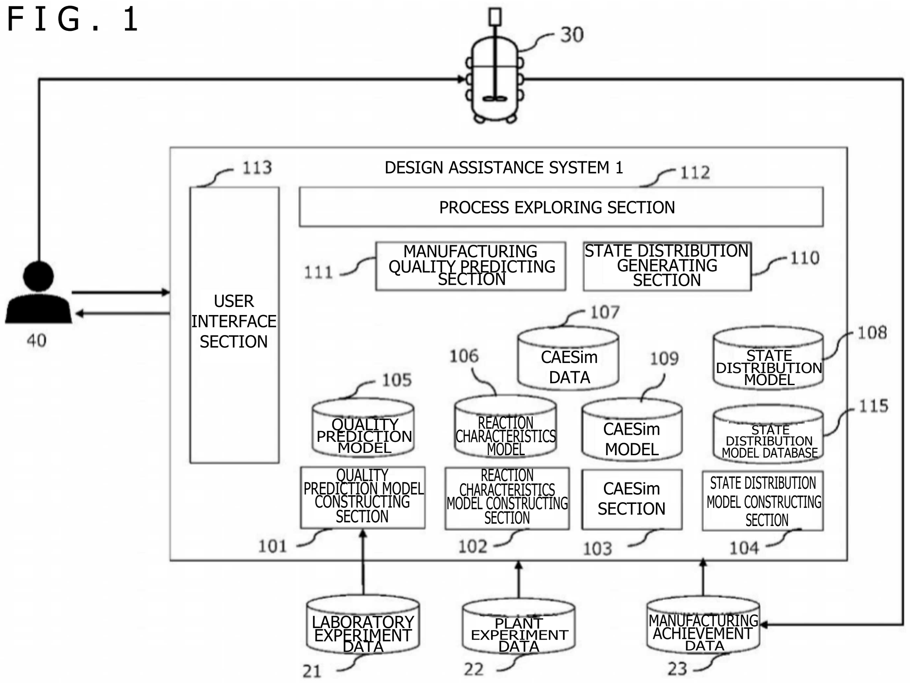

FIG. 1 is a figure depicting an example of the configuration of the design assistance system 1 in the present embodiment.

The design assistance system 1 is connected to: laboratory experiment data 21 storing experiment data of small-scale experiments; plant experiment data 22 storing experiment data of large-scale tests; and manufacturing achievement data 23 storing manufacturing achievement data on products actually manufactured on an actual scale in a reactor 30 or the like described later.

In addition, the design assistance system 1 stores a quality prediction model 105, a reaction characteristics model 106, a CAE simulation data 107, a state distribution model 108, a CAE simulation model 109, and a state distribution model database 115.

(Laboratory Experiment Data)

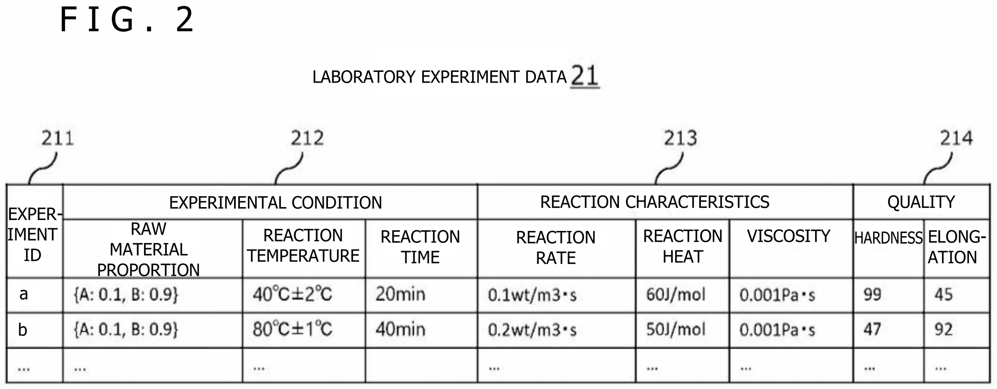

Here, FIG. 2 is a figure depicting an example of the laboratory experiment data 21. The laboratory experiment data 21 is data storing experimental conditions and experimental results of small-scale experiments. Specifically, for each small-scale experiment, the laboratory experiment data 21 stores respective pieces of data on: an experiment ID 211 for identifying the experiment; experimental conditions 212 of the experiment; reaction characteristics 213 of the experiment; and quality 214 of an outcome (product) obtained by the experiment, in association with each other.

The experimental conditions 212 and the reaction characteristics 213 are data related to raw materials or processes performed on the raw materials. Specifically, the experimental conditions 212 include the composition of the raw materials (components and their proportions) used for the experiment, the reaction temperature, and the reaction time. The reaction characteristics 213 include the reaction rate, the reaction heat, the viscosity of the solution measured in the experiment implemented under the experimental conditions. The quality 214 includes the hardness and elongation of the material obtained by the experiment implemented under the experimental conditions. Note that the items of each piece of data explained here are examples. The experimental conditions 212 and the reaction characteristics 213 can include various parameters representing the content of physical or chemical processing. In addition, the quality 214 can include various parameters representing physical or chemical properties of the product.

Note that the laboratory experiment data 21 is used for the generation of the quality prediction model 105 and the reaction characteristics model 106.

(Configuration of Plant Experiment and Plant Experiment Data)

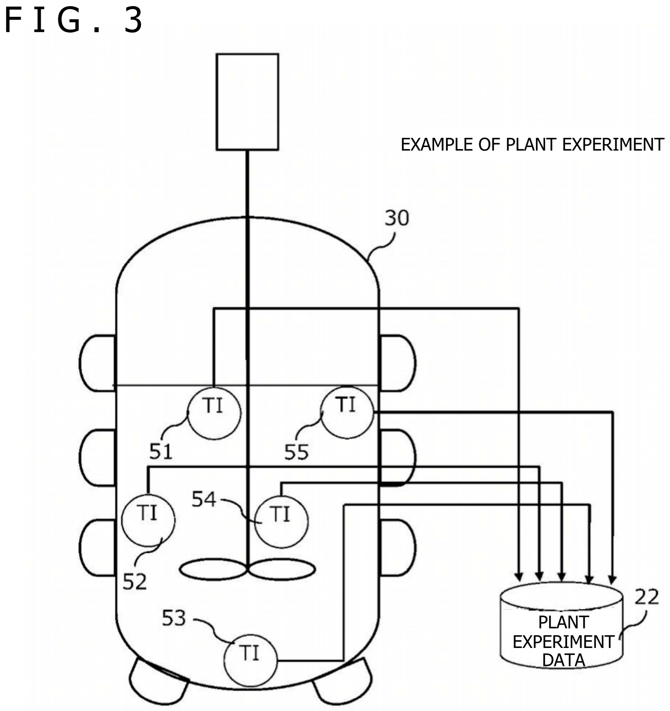

Next, FIG. 3 is a figure depicting an example of the configuration of a plant experiment.

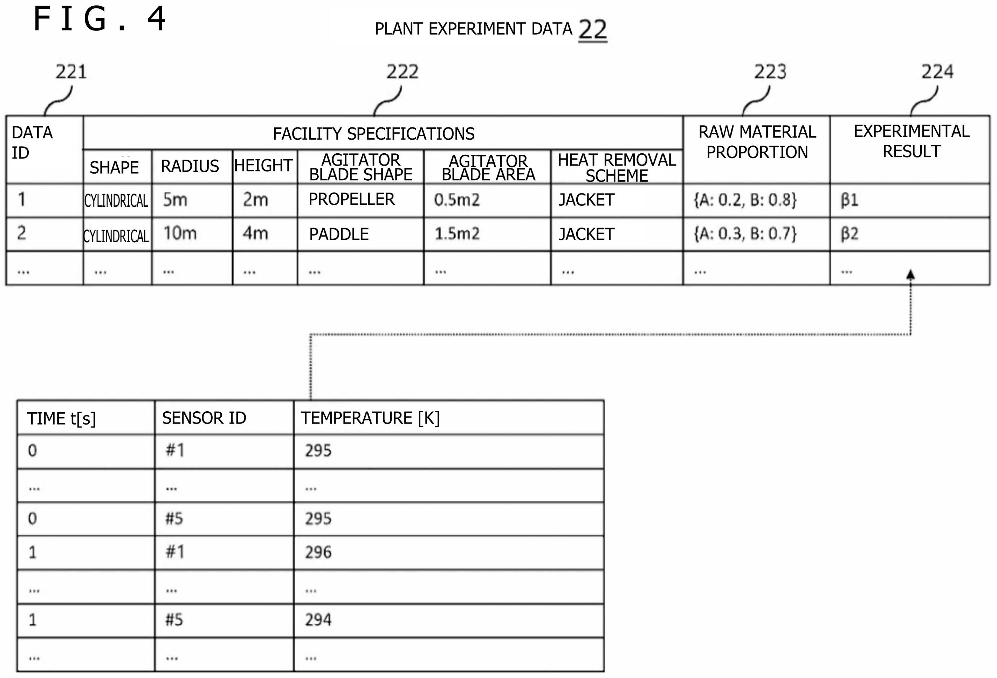

In addition, FIG. 4 is a figure depicting an example of the plant experiment data 22 obtained by the plant experiment.

First, as depicted in FIG. 3, in this plant experiment, thermometers 51 to 55 are installed at respective locations in a container (reactor 30) having a spatial area that can house raw materials. Predetermined operation system or control system information processing (which may be the design assistance system 1, for example) measures the temperatures with the thermometers 51 to 55, and registers the temperatures in the plant experiment data 22 at predetermined time intervals while operating the reactor 30. Note that an operator may register measured temperatures in the plant experiment data 22 while operating the reactor 30. Note that the respective positions of the thermometers 51 to 55 are preferably set such that the values of the temperatures measured at the respective positions vary.

Next, as depicted in FIG. 4, the plant experiment data 22 is data in which, for each plant experiment, an ID 221 of the plant experiment, equipment facility specifications 222 of the plant experiment, the composition of raw materials (raw material proportions 223) of the plant experiment, and results 224 of the plant experiment are associated with each other. The results 224 of the plant experiment include parameters (temperatures) measured by respective sensors (e.g. the thermometers 51 to 55) at each time. Note that the data on times and temperatures in the results 224 of the plant experiment has, although having different data granularity, a structure identical to that of data on times and temperatures in simulation results 1074 in the CAE simulation data 107 described later. The plant experiment data 22 is used for the generation of the state distribution model 108.

(CAE Simulation Data)

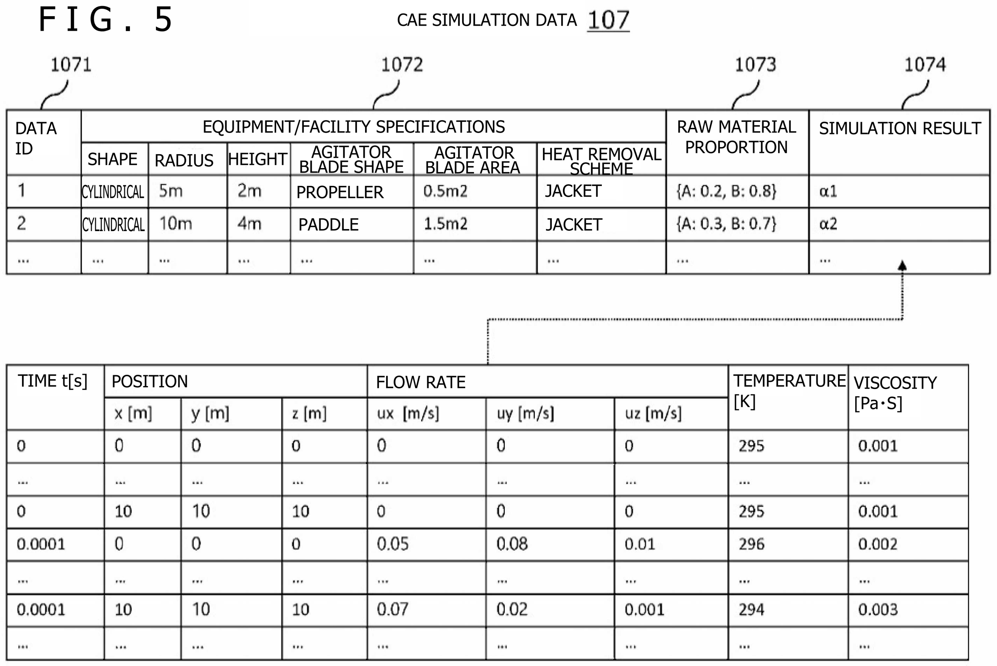

Next, FIG. 5 is a figure depicting an example of the CAE simulation data 107. The CAE simulation data 107 is a database in which execution results of a coupling simulation model which is obtained by coupling the CAE simulation model 109 and the reaction characteristics model 106 are recorded. Specifically, in the CAE simulation data 107, for each coupling simulation, an ID 1071 for identifying the coupling simulation, equipment facility specifications 1072 which are data defining a reaction process, the composition of raw materials (raw material proportions 1073) set as input values for the coupling simulation, and results 1074 of the coupling simulation are stored in association with each other.

The equipment facility specifications 1072 are data that is set as input values for the coupling simulation, and is related to a container (reactor) where the process is executed or apparatuses, equipment, or facilities used for the process (hereinbelow, these reactor, apparatuses, equipment, and facilities are collectively called apparatuses). The equipment facility specifications 1072 include a reactor shape, a reactor radius, a reactor height, the shape of an agitator blade installed in the reactor, an agitator blade area, and a scheme of heat removal set for the reactor, for example. The raw material proportions 1073 include the components of raw materials and their proportions. In addition, the simulation results 1074 include the flow rate (three-dimensional flow rate), temperature, and viscosity in the reactor at each position (three-dimensional position coordinates) at each time.

(State Distribution Model Database)

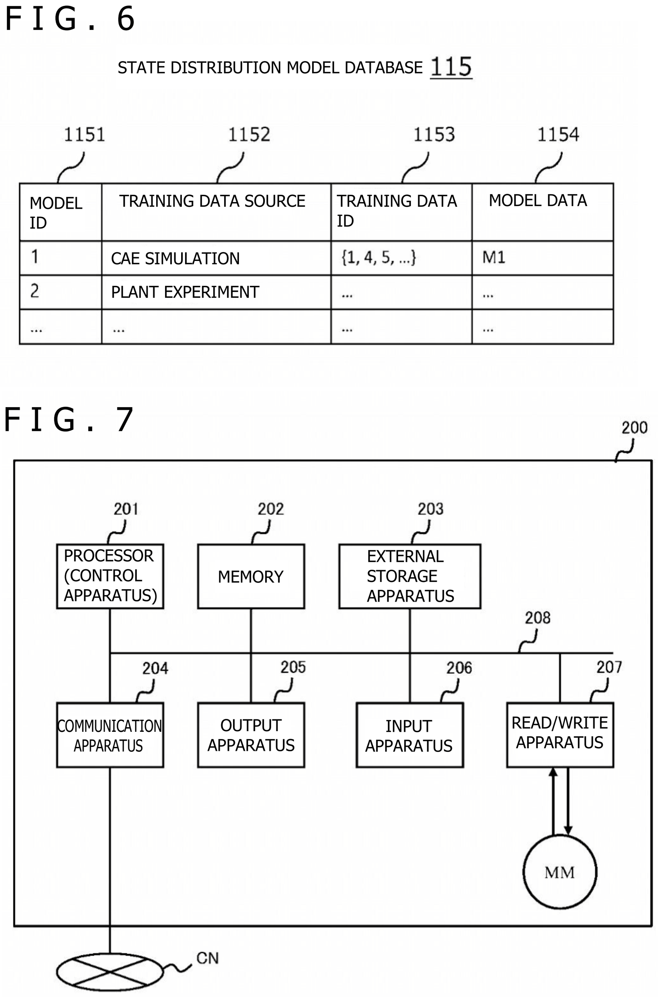

FIG. 6 is a figure depicting an example of the state distribution model database 115. The state distribution model database 115 stores a data source for generating each state distribution model 108.

Specifically, the state distribution model database 115 have respective pieces of data on: an ID of the state distribution model 108; the type of data (training data source 1152) used for generating the state distribution model 108; information (training data ID 1153) identifying the content of the data source; model data 1154 storing the content of the state distribution model 108. The training data source 1152 is data representing the CAE simulation data 107 or the plant experiment data 22, for example. The training data ID 1153 is information identifying a specific data source of the CAE simulation data 107 or the plant experiment data 22 (specifically, a data ID 2111 of the plant experiment data 22 or a data ID 1071 of the CAE simulation data 107).

Next, as depicted in FIG. 1, the design assistance system 1 has respective functional sections (program) including a quality prediction model constructing section 101, a reaction characteristics model constructing section 102, a CAE simulating section 103, a state distribution model constructing section 104, a state distribution generating section 110, a manufacturing quality predicting section 111, a process exploring section 112, and a user interface section 113.

The quality prediction model constructing section 101 generates, on the basis of data of small-scale experiments, the quality prediction model 105 that predicts the quality of products (deliverables) manufactured on the basis of specified experimental conditions and reaction characteristics of raw materials.

Specifically, the quality prediction model 105 is a model that receives input of data representing states (temperatures) and data representing a reaction process (the experimental conditions 212 and the reaction characteristics 213 in the laboratory experiment data 21) performed on raw materials in that states, and outputs data representing the quality of deliverables generated from the raw materials in the reaction process. Note that it is assumed in the present embodiment that the quality prediction model 105 is generated and stored in advance.

In addition, it is assumed in the present embodiment that the quality prediction model 105 is generated on the basis of the laboratory experiment data 21. That is, input values of the quality prediction model 105 are data corresponding to the experimental conditions 212 and the reaction characteristics 213 in the laboratory experiment data 21. Output values of the quality prediction model 105 are data corresponding to the quality 214 in the laboratory experiment data 21.

The reaction characteristics model constructing section 102 generates the reaction characteristics model 106.

In the present embodiment, the reaction characteristics model 106 is a model that calculates changes in characteristics from the start to the end of the execution of a reaction in a large-scale test. It is assumed that the reaction characteristics model 106 is a model that receives input values of the composition of raw materials, the reaction temperature, or the reaction time, and outputs the value of the reaction rate, the reaction heat, or the solution viscosity.

It is assumed in the present embodiment that the reaction characteristics model 106 is generated on the basis of a predetermined machine learning algorithm on the basis of the laboratory experiment data 21. For example, the reaction characteristics model 106 is a model trained by a neural network (CNN: Convolutional Neural Network, etc.) having: an input layer to which input values are input; one or more intermediate layers (hidden layers) that extract feature values from the input values, and output the feature values; and an output layer that outputs output values from the feature values. For example, the reaction characteristics model 106 is generated by machine learning performed using, as teaching data, the experimental conditions 212 (corresponding to the input values) and the reaction characteristics 213 (corresponding to the output values) in the laboratory experiment data 21, for example.

It is assumed in the present embodiment that the reaction characteristics model 106 has been generated and stored in advance. Note that, the reaction characteristics model 106 may be a mathematical formula that treats, as input variables, a predetermined reaction stoichiometric equation, a chemical descriptor, a molecular weight distribution, and the like, and treats, as output variables, a reaction rate, reaction heat, viscosity, and the like, for example.

The CAE simulating section 103 stores the CAE simulation model 109. The CAE simulating section 103 generates the CAE simulation data 107 by executing the CAE simulation model 109.

The CAE simulation model 109 is a model that predicts the fluid behavior in a reactor in a large-scale test. Specifically, the CAE simulation model 109 includes a governing equation (Navier-Stokes equation) that treats, as input values, the specifications (shape and the like) of the reactor, and calculates states (temperature, viscosity, etc.) of materials at each position at each time in the reactor after a motion process (fluid motion) of the materials in the reactor.

The CAE simulating section 103 executes a coupling simulation model combining the CAE simulation model 109 and the reaction characteristics model 106. That is, the coupling simulation model is a model that receives input of data defining a process (flow reaction process) of raw materials distributed in the spatial area of the reactor, and outputs states of the raw materials of each position in the reactor at each time after the start of the flow reaction process.

It is assumed in the present embodiment that the reaction characteristics model constructing section 102 has generated in advance the coupling simulation model on the basis of the state distribution model database 115.

Note that the coupling simulation model may include a simulation model of a type that is different from the models explained above. For example, the coupling simulation model may include a kneading simulation model if the product manufacturing process includes an extrusion process. In addition, for a process not involving chemical reactions (e.g. a steel manufacturing process), the reaction characteristics model constructing section 102 and the reaction characteristics model 106 are not necessary, and the coupling simulation model may include only the CAE simulation model 109.

Note that coupling simulations at such a scale of large-scale tests can be executed using various software such as commercial simulator software or OSS (Open Source Software), but executing these softwares requires enormous load and time. For example, in order to accurately track the progress of reactions and changes in viscosity, computations with fine granularity in both time and space are required. In addition, since it is necessary to always compute solutions that are consistent with the boundary conditions regarding the reactor wall surfaces and the agitator blades, there is a fear that, depending on conditions, the computations may not converge or physically meaningless solutions are obtained. Because of this, such software can be executed only within an extremely limited range, and using those types of software alone typically does not provide information necessary for the identification of process design parameters. However, in the present embodiment, even in such a situation (even in a case where only a limited number of simulation results can be obtained), it is possible to identify process design parameters by combining the quality prediction model 105 and the state distribution model 108 generated on the basis of the results of those types of software.

Next, the state distribution model constructing section 104 generates the state distribution model 108 using the CAE simulation data 107 or the plant experiment data 22.

The state distribution model 108 receives input of: data on the composition of raw materials (components of the raw materials, and their proportions); and data (process design parameters) defining a process to be performed on the raw materials existing in the reactor, and outputs data representing the state ununiformity in the reactor at each time (during or after the execution of the process) after the start of the process.

Here, process design parameters in the input values are data defining the manufacturing process. In the present embodiment, although it is assumed that, for example, the process design parameters are the specifications of an apparatus (the shape or size, etc.) or operating conditions (the scheme of the process like an agitation scheme or a cooling scheme, the time profile of states for smoothly performing the reaction, etc.), this is not the sole example.

The output values which are the data representing the ununiformity of the state distribution model 108 are parameters of states having the possibility of changes or variation in the distribution depending on the execution of the process, and serve as input values of the quality prediction model 105. In the present embodiment, although the output values of the state distribution model 108 are temperatures inside the reactor, this is not the sole example, and, for example, the output values may be the concentration or density of raw materials or products in the reactor. In addition, whereas it is assumed that the data representing the ununiformity is a probability distribution (the mean and variation), other data representing the ununiformity may be used. Note that, although the state at each position in a three-dimensional space is computed in a typical CAE simulation, in the present embodiment, by expressing the state at each position (variation) by using a probability distribution which is a parameter that can express the state at each position as a whole, the cost related to arithmetic operation or data storage of the state at each position can be reduced.

The state distribution model 108 includes a probability density function f0(y(t)) of states (here, temperatures) represented, for example, by the following Mathematical Formula 1, and further has a function to generate a state y(t) by performing sampling according to the probability density at a time t.

[Math. 1]

$$f_0\big(y(t)\big) = \frac{1}{\sqrt{2\pi\sigma(t)^2}} \exp\left(-\frac{\big(y(t)-\mu(t)\big)^2}{\sigma(t)^2}\right)$$

Here, the state y(t) is the state value at the time t, $\sigma$(t) is the variation of the state y(t) at the time t, and $\mu$(t) is the mean of the state y(t) at the time t.

Furthermore, the time evolution of $\sigma$(t) and $\mu$(t) is determined by the variation, mean, and a process design parameter (external input) of a past time before the time t, as represented by the Mathematical Formula 2.

[Math. 2]

$$\begin{bmatrix} \mu(t_{i+1}) \\ \sigma(t_{i+1}) \end{bmatrix} = \begin{bmatrix} f\big(\mu(t_i), \dots, \mu(t_{i-d+1}), \sigma(t_i), \dots, \sigma(t_{i-d+1}), \theta(t_i)\big) \\ g\big(\mu(t_i), \dots, \mu(t_{i-d+1}), \sigma(t_i), \dots, \sigma(t_{i-d+1}), \theta(t_i)\big) \end{bmatrix}$$

Here, $\theta$(t) is an external input at the time t, and is equivalent to a process design parameter. In the present embodiment, $\theta$(t) is a vector including data on the specifications of the apparatus (data with fixed values regardless of the time t) and a process operation quantity (a variable value dependent on the time t). d represents the order.

Note that, whereas Mathematical Formula 1 and Mathematical Formula 2 are mathematical formulae in a case where the state y is univariate, similar descriptions are possible even in a case where the state y is multivariate.

Next, the state distribution generating section 110 inputs the composition of raw materials (the proportions of raw materials, etc.) and the values of process design parameters to the state distribution model 108 generated by the state distribution model constructing section 104 to output data (i.e. the mean and variation) representing the state distribution (ununiformity) inside the reactor at each time after the start of the process.

The manufacturing quality predicting section 111 predicts the quality of products generated after the completion of the process by calculating (sampling) a plurality of values of possible specific states in the inside of the reactor from data output at the state distribution generating section 110, which data represents the state distribution (ununiformity) in the inside of the reactor, and inputting the data on the states, the composition of raw materials, and the process design parameters to the quality prediction model 105.

In the present embodiment, the manufacturing quality predicting section 111 identifies the quality variations (histogram or probability density function) in a target process by randomly sampling temperature data on the basis of the mean and variation, and inputting each piece of sampled temperature data to the quality prediction model 105 to predict quality (hardness and elongation).

The process exploring section 112 explores content of process design parameters and composition of raw materials, with which the quality predicted by the manufacturing quality predicting section 111 falls within a predetermined range. That is, the process exploring section 112 can explore the content of process design parameters and the composition of raw materials by performing an optimization in which exploration is performed as to at what probability (ratio) the quality of deliverables falls within a predetermined range while taking quality variations into consideration and also taking predetermined KPIs or constraint conditions into account.

The user interface section 113 has a function (input function) to accept, from a user 40, parameters necessary for a series of processing to be performed by the design assistance system 1, and a function (output function) to provide, to the user 40, arithmetic operation results, control results, and the like.

Specifically, the input function accepts input of information from the user 40 using a keyboard, a touch panel, a sound input apparatus, a line-of-sight sensing apparatus, or the like. The output function outputs information via a monitor display, a printer, a sound synthesizing apparatus, or the like.

Note that the user interface section 113 may be provided to an information processing apparatus different from the design assistance system 1. The information processing apparatus is, for example, a laptop-type personal computer, a note-type personal computer, a tablet-type personal computer, a desktop-type personal computer, another type of personal computer, a smartphone, a goggles-type wearable terminal, a wristwatch-type wearable terminal, or another type of wearable terminal operated by the user 40.

FIG. 7 is a figure depicting an example of hardware included in an information processing apparatus included in the design assistance system 1. For example, an information processing apparatus 200 includes a processor 201 (control apparatus), a memory 202, an external storage apparatus 203, a communication apparatus 204, an output apparatus 205, an input apparatus 206, and a read/write apparatus 207, and these apparatuses are interconnected via a communication line 208. The processor 201 is not limited to a CPU (Central Processing Unit), but may be another apparatus having an arithmetic operation function. The external storage apparatus 203 is an apparatus that rewritably stores a relatively large volume of data, such as a hard disk apparatus, a flash memory apparatus, an magneto-optical disk apparatus, or an optical disk apparatus. The communication apparatus 204 is configured like an NIC (Network Interface Card) or the like, and communicates with an external apparatus via a communication network CN (a wireless or wired communication network such as the Internet, a LAN (Local Area Network), a WAN, or a dedicated line). The output apparatus 205 is an apparatus used by the user interface section 113, and is a monitor display, a printer, or the like. The input apparatus 206 is an apparatus used by the user interface section 113, and is a keyboard, a pointing device, a touch panel, or the like. The read/write apparatus 207 reads and writes information from and on a memory medium MM that non-transitorily stores a computer program. The communication line 208 may be a system bus for making connections within one computer or may be a communication network that connects a plurality of computers. That is, the design assistance system 1 can also be realized by providing principal functions of the design assistance system 1 on a plurality of computers, and interconnecting the computers on the communication network.

Various types of data that is stored on the design assistance system 1 or used for processes can be used by the processor 201 reading out the various types of data from the memory 202 or the external storage apparatus 203 and using the read out data. Functions of each functional section that the design assistance system 1 has can be realized by the processor 201 loading, onto the memory 202, and executing a predetermined computer program, which is stored on the external storage apparatus 203.

The predetermined computer program described above may be stored (downloaded) from the memory medium MM via the read/write apparatus 207 or from a network via the communication apparatus 204 onto the external storage apparatus 203, then loaded onto the memory 202, and executed by the processor 201. The computer program may be directly loaded from the memory medium MM via the read/write apparatus 207 or from a network via the communication apparatus 204 onto the memory 202, and executed by the processor 201.

In addition, whereas the design assistance system 1 includes one information processing apparatus in the case explained hereinbelow, some or all of the functions may be provided distributedly in one or more computers such as in the cloud, and the one or more computers may communicate with each other via a network to realize the respective functions of the design assistance system 1.

Next, processes performed in the design assistance system 1 are explained.

First, a process of deciding process design parameters (hereinbelow, called a process design parameter first decision process) in a case where the state distribution model 108 is generated on the basis of the CAE simulation model 109 is explained.

<Process Design Parameter Decision First Process>

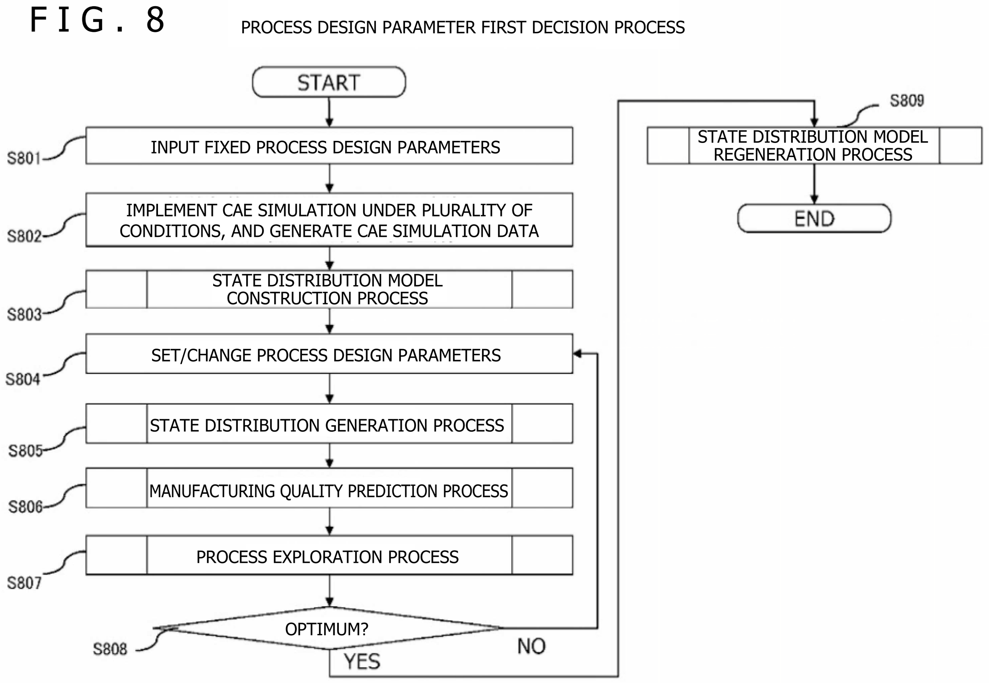

FIG. 8 is a flow chart for explaining an example of the process design parameter decision first process.

The design assistance system 1 sets fixed values of process design parameters assuming plant experiments (S801). Specifically, the user interface section 113 may accept input of fixed values set in a large-scale test from the user 40, or may receive fixed values from a database prepared in advance.

Here, in the present embodiment, as the fixed values of the process design parameters, the user interface section 113 sets the reactor shape to "cylindrical," sets the agitator blade shape to "propeller," and sets the cooling scheme to "jacket."

Then, the design assistance system 1 sets multiple types of combination of various types of value based on the fixed values of the process design parameters, and executes a coupling simulation using the set multiple types of combination as input values (S802).

Specifically, first, the CAE simulating section 103 accepts input of various types of value of the process design parameters set for a large-scale test from the user 40.

For example, the CAE simulating section 103 accepts, from the user 40, input of nominal values r0, h0, and S0 of a reactor radius r, a reactor height h, an agitator blade area S, and generates respective conditions by changing r, h, and S on the basis of the input values. Assuming that the respective parameters do not change significantly from the nominal values, for example, (r, h, S) = (0.25r0, 0.25h0, 0.25S0), (0.5r0, 0.5h0, 0.5S0), (r, h, S), (2r0, 2h0, 2S0), and (4r0, 4h0, 4S0) are generated.

Then, the design assistance system 1 inputs the respective values set as described above to the coupling simulation model (the CAE simulation model 109 and the reaction characteristics model 106) to execute coupling simulations. The design assistance system 1 stores, in the CAE simulation data 107, data output by the coupling simulation model.

Next, the design assistance system 1 executes a state distribution model construction process S803 of generating the state distribution model 108 on the basis of the CAE simulation data 107 stored at S802. Details of the state distribution model construction process S803 are described later.

Thereafter, the design assistance system 1 sets candidate values (external inputs θ0, θ1, ...) of the process design parameters for the exploration of the process design parameters (S804). For example, the design assistance system 1 may set values (values to which noise has been added) obtained by adding predetermined increment or decrement values to nominal values of condition values of the process design parameters, or may accept input of initial values from the user 40.

Then, the design assistance system 1 inputs the candidate values or the like of the process design parameters set at S804 to the state distribution model 108 generated at S803, and execute the state distribution model 108 to execute a state distribution generation process S805 of calculating the state distribution (mean and variation) in the reactor. Details of the state distribution generation process S805 are described later.

(State Distribution Model Construction Screen)

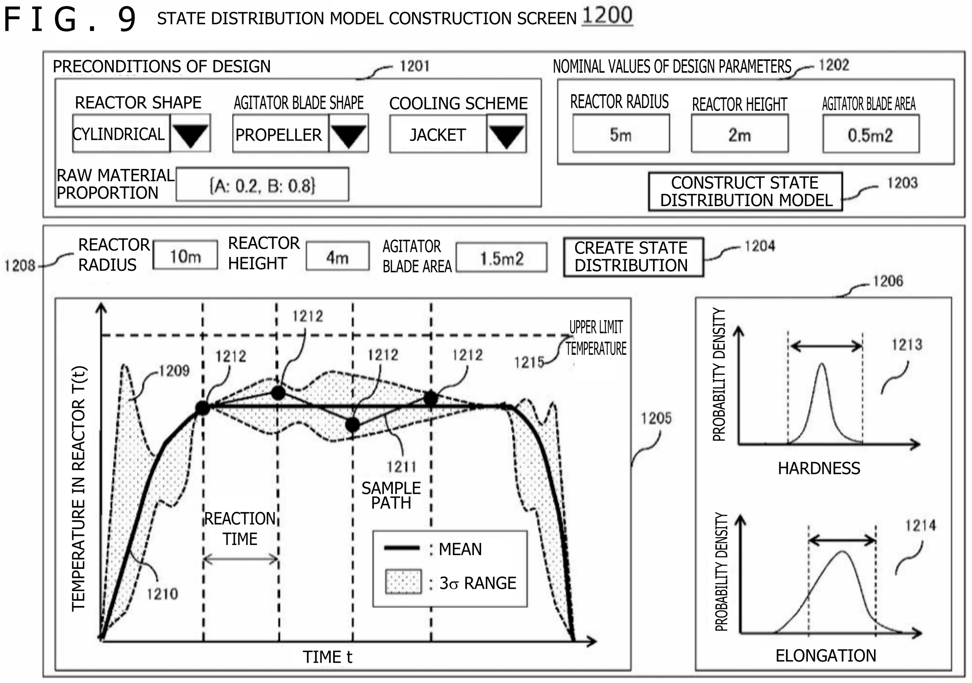

Here, FIG. 9 is a figure depicting an example of a state distribution model construction screen 1200 displayed by the design assistance system 1.

The state distribution model construction screen 1200 has: a precondition input field 1201 in which input of the composition of raw materials and fixed values of process design parameters is accepted from a user; a design parameter input field 1202 in which input of a combination of respective values of process design parameters is accepted from the user; and a state distribution model construction specifying field 1203 where generation of the state distribution model 108 is specified by the user in a case where the state distribution model 108 is generated on the basis of the data input in the precondition input field 1201 and the design parameter input field 1202.

In addition, the state distribution model construction screen 1200 has: a design parameter setting field 1208 in which input of a combination of respective values of process design parameters treated as values to be input to the generated state distribution model 108 is accepted from the user; a state distribution model execution specifying field 1204 where execution of the state distribution model 108 is specified by the user in a case where the state distribution model 108 is executed on the basis of the input values input in the design parameter setting field 1208; a graph display field 1205 in which a graph representing execution results of the state distribution model 108 is displayed; and a quality prediction display field 1206 described later.

The graph displayed in the graph display field 1205 has a horizontal axis representing times (the elapsed time since the start of a reaction), and a vertical axis representing states (here, temperatures) inside the reactor.

The graph includes a first graph 1209 representing the range of state values, and a second graph 1210 representing changes in the mean in the range. In addition, the graph includes a time-series graph (sample path graph 1211) of virtual states (temperatures) generated by linking values 1212 that are sampled from the range represented by the first graph 1209 for respective times. Details of the sampled values 1212 and the sample path are described later.

In addition, a state restriction value 1215 (the upper limit value of temperatures in the figure) is displayed in the graph display field 1205. Details of the restriction value 1215 are described later.

Next, as depicted in FIG. 8, the design assistance system 1 executes a manufacturing quality prediction process S806 of predicting the quality of manufactured products by inputting, to the quality prediction model 105, information about each state sampled from the state distribution output at S805. Details of the manufacturing quality prediction process S806 are described later.

Then, the design assistance system 1 executes a process exploration process S807 of evaluating whether the process design parameters and the composition of the raw materials set at S804 are good or bad from each type of quality (the quality distribution) of products predicted in the manufacturing quality prediction process S806. Specifically, the process exploring section 112 inputs the quality distribution, the process design parameters, and the composition of the raw materials to a predetermined objective function that evaluates whether process design parameters and the like are good or bad, and acquires a value therefrom. Details of the process exploration process S807 are described later.

Where a change in the value of the objective function acquired at S807 has become equal to or smaller than a predetermined value (where the difference between the value acquired at S807 and the previous value acquired at S807 has become equal to or smaller than the predetermined value) (S808: YES), a process of S809 is executed. Where a change in the value of the objective function acquired at S807 exceeds the predetermined value (S808: NO), the process exploring section 112 repeats the process of S804 so as to set different process design parameters.

Note that, whereas the optimization process from S804 to S808 is executed by what is called the gradient method in the example depicted here, an optimization problem may be solved using another optimization technique such as the greedy method or random search.

At S809, the design assistance system 1 executes a state distribution model regeneration process S809 of updating the state distribution model 108 on the basis of the process design parameter changed at the process exploration process S807. Details of the state distribution model regeneration process S809 are described later. This ends the process design parameter decision first process.

The process above makes it possible to explore design parameters of a process that is likely to realize target quality in actual manufacturing.

Next, details of the state distribution model construction process S803, the state distribution generation process S805, the manufacturing quality prediction process S806, and the process exploration process S807 are explained.

<State Distribution Model Construction Process>

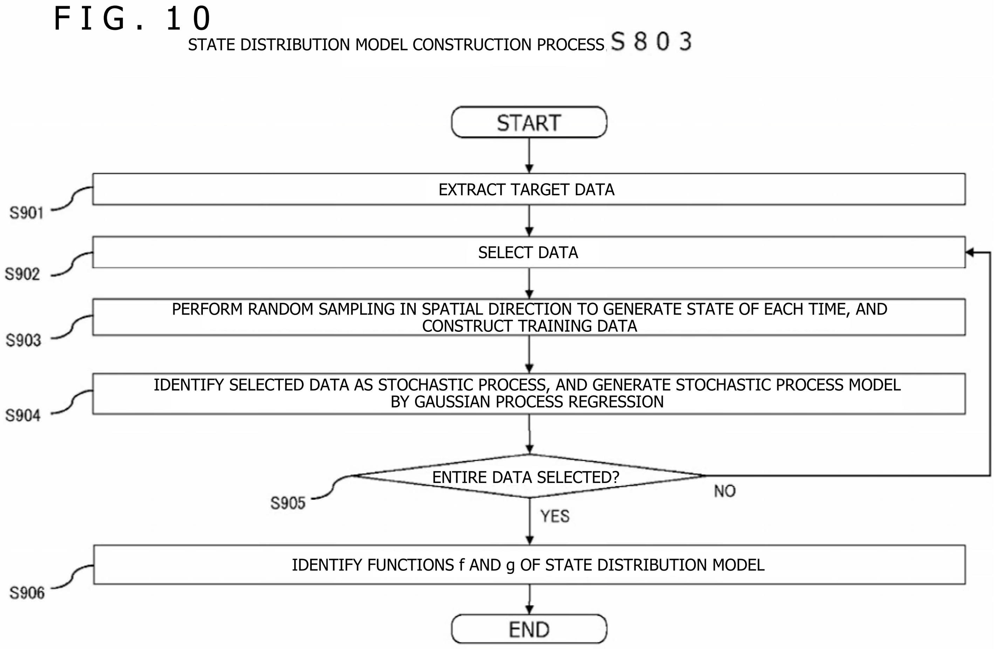

FIG. 10 is a flow chart for explaining details of the state distribution model construction process S803.

The CAE simulating section 103 extracts one target process design parameter meeting the conditions set at S801 from the CAE simulation data 107 (S901).

In the present embodiment, the CAE simulating section 103 extracts, from the CAE simulation data 107, data on a data ID for which the reactor shape is cylindrical, the agitation blade shape is propeller, and the cooling scheme is jacket.

Next, the CAE simulating section 103 acquires the simulation results 1074 (the spatial distribution of temperatures at each time) from the CAE simulation data 107 related to the coupling simulation performed on the basis of the process design parameter extracted at S901 and the set composition of raw materials (the proportions of the raw materials) (S902).

The CAE simulating section 103 samples a plurality of positions randomly from the simulation result 1074 acquired at S902, and acquires the time series of temperatures at the plurality of positions to generate a plurality of time series (sample paths) of virtual temperatures, and store the generated sample paths as training data (S903).

Note that the CAE simulating section 103 may perform the sampling automatically, or may accept the specifying of data to be sampled (the sampled values 1212) by the user 40 on the state distribution model construction screen 1200. In addition, the number of pieces of data to be sampled at each time may be constant or may be a number according to variation.

The CAE simulating section 103 generates, on the basis of the training data stored at S903, a stochastic process model related to state values $y(t_0) \ldots y(t_{n-1})$ at each time point t like the one represented by Mathematical Formulae 3 to 5 (S904). This identification can be executed using a stochastic identification technique such as Gaussian process regression.

[Math. 3]

$$\begin{bmatrix} y(t_0) \\ \vdots \\ y(t_{N-1}) \end{bmatrix} \sim \mathcal{N}_N\left(\mu_{\mathcal{T}_N}, \Sigma_{\mathcal{T}_N}\right)$$

$$\mathcal{T}_N := \{t_0, t_1, \ldots, t_{N-1}\}$$

[Math. 4]

$$\mu_{\mathcal{T}_N} = \begin{bmatrix} \mu(t_0) \\ \vdots \\ \mu(t_{N-1}) \end{bmatrix} \in \mathbb{R}^N$$

[Math. 5]

$$\Sigma_{\mathcal{T}_N} = \begin{bmatrix} V(t_0,t_0) & \cdots & V(t_0,t_{N-1}) \\ \vdots & \ddots & \vdots \\ V(t_{N-1,t_0}) & \cdots & V(t_{N-1},t_{N-1}) \end{bmatrix} \in \mathbb{R}^{N \times N}$$

Here, NN represents an N-dimensional normal distribution, Mathematical Formula 4 represents the mean at each time point, and Mathematical Formula 5 represents a covariance matrix between time points. In addition, $\mu$ represents the mean, and V represents the variation.

The CAE simulating section 103 checks whether or not all the target process design parameters have been extracted at S901 (S905). Where all the target process design parameters have been extracted at S901 (S905: YES), the CAE simulating section 103 executes a process of S906. Where there is a process design parameter having not been extracted at S901 (S905: NO), the CAE simulating section 103 repeats the process of S902 to select the process design parameter.

At S906, the CAE simulating section 103 identifies the state distribution model 108 represented by Mathematical Formula 6 on the basis of the stochastic process model generated at the process above, the states (the mean $\mu(t)$, the variation V(t, t)) obtained from S902, and process design parameters (externally input data) (S906). This ends the state distribution model construction process S803.

Note that the identification of the state distribution model 108 can be realized by a typical system identification technique such as ARX model identification or Hammerstein-Wiener model identification. Thereby, it is possible to grasp how the state distribution varies resulting from a change in the process design parameters.

[Math. 6]

$$\begin{bmatrix} \mu(t_{i+1}) \\ V(t_{i+1},t_{i+1}) \end{bmatrix} = \begin{bmatrix} f\left(\mu_{\mathcal{T}_{i,d}}, V_{\mathcal{T}_{i,d}}, \theta_i\right) \\ g\left(\mu_{\mathcal{T}_{i,d}}, V_{\mathcal{T}_{i,d}}, \theta_i\right) \end{bmatrix}$$

$$\mathcal{T}_{i,d} \coloneqq \{t_i, t_{i-1}, \dots, t_{i-d-1}\},$$

$$V_{\mathcal{T}_{i,d}} \coloneqq [V(t_i, t_i), \dots, V(t_{i-d-1}, t_{i-d-1})]^{\mathsf{T}}$$

$$f: \mathbb{R}^{(d+1) \times d+p} \to \mathbb{R},$$

$$g: \mathbb{R}^{(d+1) \times d+p} \to \mathbb{R}^d$$

External input at the time point $t_i$

Here, a component (first component) related to the mean $\mu(t)$ in Mathematical Formula 6 can be identified also by identifying the structure of a differential equation from the theoretical formula for reaction heat or the like based on the energy balance law or a reaction rate formula, and estimating parameters of the structure using the mean $\mu(t)$, the variation V(t,t), and externally input data. In this case, the range of possible values of the mean $\mu(t)$ is restricted. Accordingly, it is anticipated that predicting becomes easier even the state distribution in relation to process design parameters of an unknown area (i.e. an area where there are no actual results of CAE simulations).

<State Distribution Generation Process>

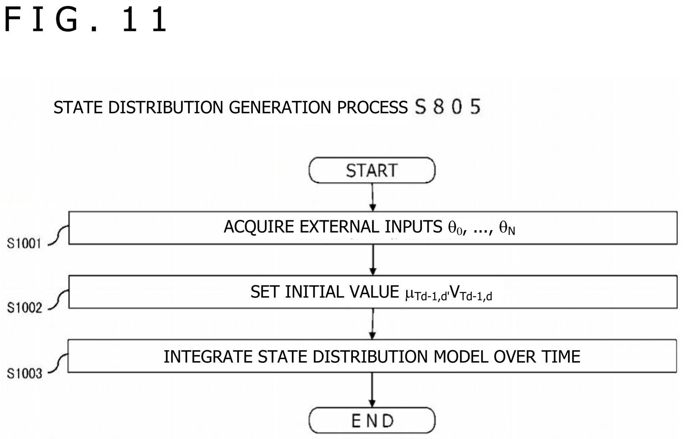

Next, FIG. 11 is a flow chart for explaining details of the state distribution generation process S805.

The state distribution generating section 110 acquires the process design parameters acquired at S804 as an external input (S1001). In addition, the state distribution generating section 110 sets initial values of the state (temperature)

distribution (the mean $\mu(t)$ and the variation $V(t, t)$) (S1002). The initial value of the mean of states (temperatures) is set to an initial condition (an initial temperature, etc.) at the time of manufacturing of the product, for example. In addition, the initial value of the variation of states (temperatures) is set to zero since there are no inconsistencies.

The state distribution generating section 110 computes the mean and variation of states (temperatures) at each time by integrating the state distribution model represented by Mathematical Formula 6 over time on the basis of the external input and the initial values of the state (temperature) distribution set at S1001 and S1002, respectively (S1003). This ends the state distribution generation process S805.

<Manufacturing Quality Prediction Process>

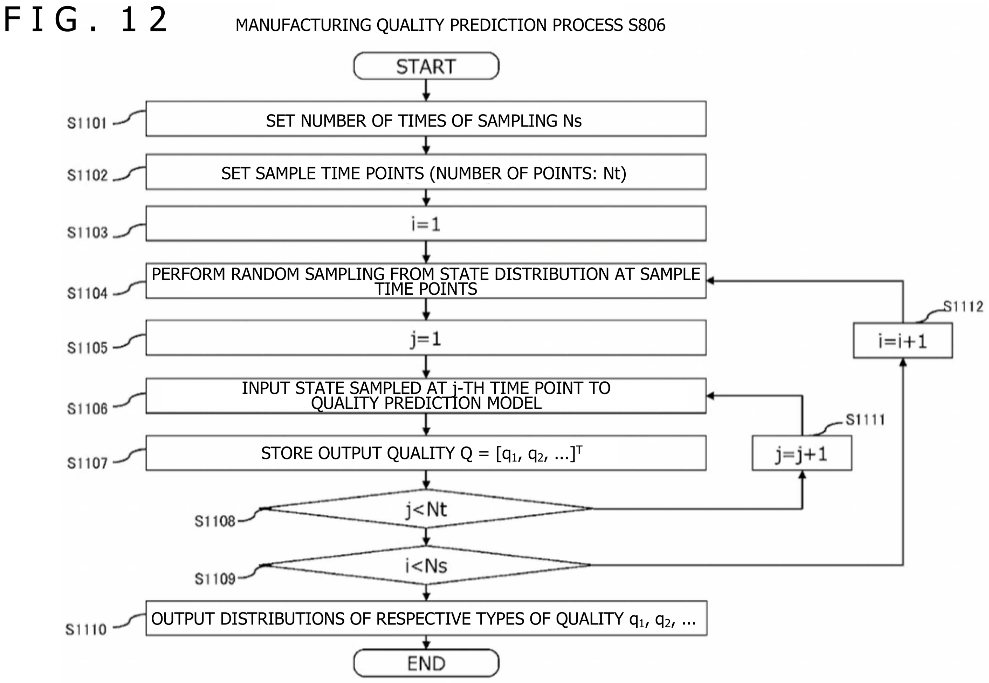

FIG. 12 is a flow chart for explaining details of the manufacturing quality prediction process S806.

The manufacturing quality predicting section 111 first sets the number of times of sampling Ns (S1101). The number of times of sampling is the number of times of sampling of state values performed at each time. The manufacturing quality predicting section 111 sets the number of times of sampling Ns by reading in a value recorded in a setting file created by the user 40 in advance, for example.

In addition, the manufacturing quality predicting section 111 sets the total number Nt of times (sample time points) at which quality prediction is performed and the sample time points (T1, T2, ... TNt). Specifically, the manufacturing quality predicting section 111 identifies the possible range of sample time points (the time range from the start of a reaction to the end of the reaction) on the basis of the reaction time in the laboratory experiment data 21. Then, the manufacturing quality predicting section 111 accepts, from the user 40, input of respective sample time points in the range to set Nt.

For example, the manufacturing quality predicting section 111 accepts, from the user 40, input of the values 1212 of the respective times on the sample path graph 1211 displayed on the state distribution model construction screen 1200 (in the case of the figure, Nt = 4).

Then, the manufacturing quality predicting section 111 sets an index i for counting the samples to 1 (S1103), and executes a process of S1104.

At S1104, the manufacturing quality predicting section 111 randomly extracts (samples) state values y(t) (T1, T2, ..., TNt) (here, temperature values) from the range of state values represented by a probability distribution f(y(t)) obtained at the state distribution model construction process S803 for each time point of the sample time points t = T1, T2, ..., TNt.

Next, the manufacturing quality predicting section 111 sets an index j for sample time points to 1 (S1105), and executes a process of S1106.

At S1106, the manufacturing quality predicting section 111 inputs, to the quality prediction model 105, a state value y(tj) at a sample time point Tj and the preset composition of raw materials, and executes the quality prediction model 105 to calculate (predict) the product quality Q. Note that Q is [q1, q2, $\cdots$, qk]T, and qk is the value of quality k (e.g. hardness, elongation) at the time of completion of the process.

The manufacturing quality predicting section 111 stores the calculated quality Q (S1107).

The manufacturing quality predicting section 111 repeats the processes of S1106 and S1107 for each time (j = 1, $\cdots$, Nt) (S1108 and S1111) to calculate and store the quality Q corresponding to each sample path.

Thereafter, the manufacturing quality predicting section 111 repeats the processes of S1104 to S1108 for each sample (i = 1, $\cdots$, Ns) (S1109 and S1112) to calculate and store the quality Q of each sample.

Thereafter, the manufacturing quality predicting section 111 outputs, in a histogram format or a probability density function format, the distribution of the quality Q calculated by the processes above (S1110).

For example, the manufacturing quality predicting section 111 displays a graph 1213 related to hardness and a graph 1214 related to elongation in the quality prediction display field 1206 of the state distribution model construction screen 1200. The graph 1213 related to hardness is a graph having a horizontal axis representing hardness values and a vertical axis representing the probability (probability density) of the occurrence of the hardness values. The graph 1214 related to elongation is a graph having a horizontal axis representing elongation values and a vertical axis representing the probability (probability density) of the occurrence of the elongation values.

<Process Exploration Process>

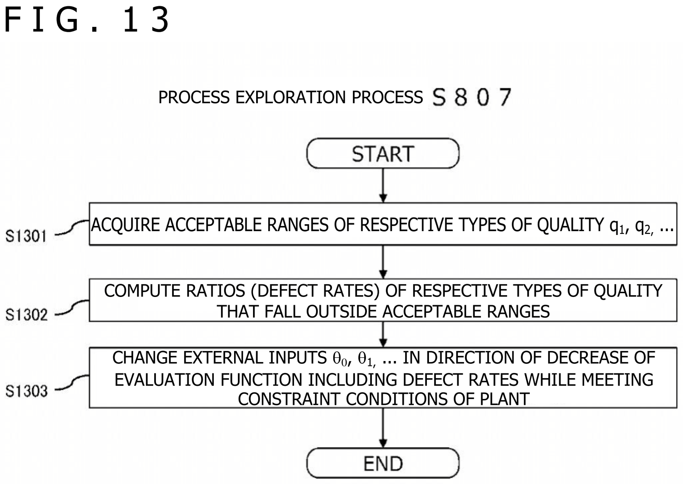

Next, FIG. 13 is a flow chart for explaining details of the process exploration process S807.

The process exploring section 112 acquires data representing acceptable ranges of products (ranges of required product quality) (S1301).

For example, the process exploring section 112 accepts, from the user 40, input of upper limit values and lower limit values of the acceptable ranges. It is assumed in the present embodiment that the process exploring section 112 accepts, from the user 40, input of upper limit values (q1,max, q2,max) and lower limit values (q2,max, q2,min) of hardness q1 and elongation q2.

The process exploring section 112 computes defect rates (P(q1), P(q2), ...) which are probabilities (ratios) of the respective types of quality q1, q2, ... falling outside the acceptable ranges (S1302), on the basis of the quality Q calculated at the manufacturing quality prediction process S806 and the acceptable ranges acquired at S1301. It is assumed in the present embodiment that the process exploring section 112 calculates the defect rates by the following Mathematical Formula 7.

[Math. 7]

$$P(q_1) = 1 - \frac{\int_{q_1,\min}^{q_1,\max} dq_1}{\int dq_1}, P(q_2) = 1 - \frac{\int_{q_2,\min}^{q_2,\max} dq_2}{\int dq_2}, \dots$$

Thereby, it becomes possible to explore process design parameters taking into consideration the quality distribution according to variations in states inside the process.

The process exploring section 112 generates an objective function that gives a value that decreases as the defect rates decrease and a constraint condition equation related to the objective function on the basis of the defect rates calculated at S1302. It is assumed in the present embodiment that the process exploring section 112 generates an objective function related to respective defect rates represented by the following Mathematical Formula 8 and a constraint condition equation related to states of an apparatus represented by Mathematical Formula 9.

[Math. 8]

$$J = aP(q_1) + bP(q_2)$$

[Math. 9]

$$\min_{\theta_0, \theta_1, \dots} J(P(q_1), P(q_2), \dots)$$

$$\text{s.t. } T_{\min} < T < T_{\max}$$

Here, a and b represent constants. θ represents an external input, Tmin represents the minimum value of the temperature, Tmax represents the maximum value of the temperature, and T represents the temperature. Note that T may represent the mean of the temperature, may be the maximum value (to be used for comparison with Tmax) of the temperature, or may be the minimum value (to be used for comparison with Tmin) of the temperature. Note that the process exploring section 112 may automatically generate the objective function and the constraint condition equation, or may accept input of the objective function and the constraint condition equation from the user 40.

The process exploring section 112 performs an exploratory computation to change the external inputs θ0, θ1, ... such that the value of the objective function is minimized while meeting the constraint condition equation (S1303). Note that the changes of the external inputs θ in the exploratory computation may be made by, for example, storing the computed value of the objective function in advance, computing the gradient for the external inputs θ0, θ1, ..., and changing the external inputs θ0, θ1, ... in the direction of the steepest gradient.

Note that the objective function and the constraint condition equation explained here are examples, and may be other than these as long as an explanatory variable (quality or defect rates) is optimized under constraint conditions.

In addition, whereas process design parameters are explored while the reactor shape, the agitator blade shape, the cooling scheme, the combination of raw materials, and the proportions of the raw materials are fixed in the case explained here, these also may be treated as exploration targets. In this case, the reactor shape, the agitator shape, the cooling scheme, and the combination of raw materials typically are discrete variables, and accordingly the optimization problem depicted regarding S1303 is a mixed integer programming problem. Because of this, a solver different from the one depicted in the present embodiment is used for execution.

(Process Exploration Screen)

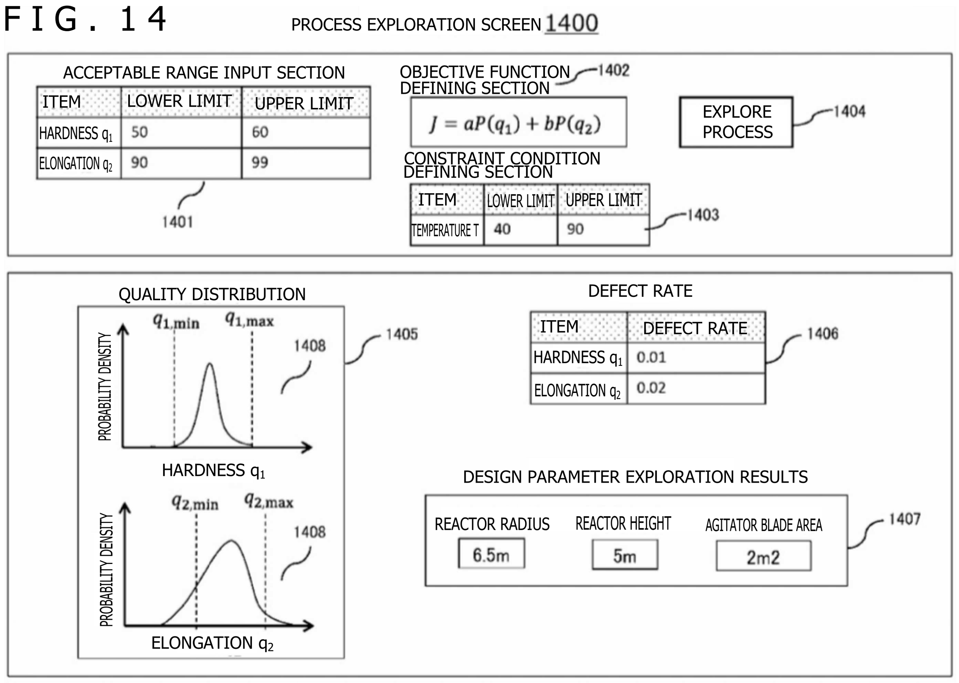

FIG. 14 is a figure depicting an example of a process exploration screen 1400 displayed in the design assistance system 1 at the process exploration process S807.

The process exploration screen 1400 includes: an acceptable range input section 1401 on which input of acceptable ranges (upper limits and lower limits) of products are accepted from the user 40 about respective types of quality; an objective function defining section 1402 in which an objective function is displayed or input of an objective function from the user 40 is accepted; a constraint condition defining section 1403 in which information necessary for the generation of a constraint condition equation (e.g. the range (upper limit and lower limit) of states (temperatures)) is displayed or input of information necessary for the generation of a constraint condition equation is accepted from the user 40; and a process exploration executing section 1404 selected by the user in a case where an exploratory computation is to be executed.

In addition, the process exploration screen 1400 includes: a graph display section 1405 in which a graph of the distribution of each type of quality of products calculated in the course of the exploratory computation is displayed; a defect rate display section 1406 in which defect rates calculated in the course of the exploratory computation are displayed; and a process design parameter display section 1407 in which the values of process design parameters calculated by the exploratory computation are displayed.

In the graph display section 1405, graphs 1408 each having a horizontal axis representing the value of a type of quality in the respective types of quality of products and a vertical axis representing the value of the probability (probability density) of the value of the quality are displayed. Note that the range (upper limit value and lower limit value) of a type of quality is displayed in each of the graphs 1408.

<State Distribution Model Regeneration Process S809>

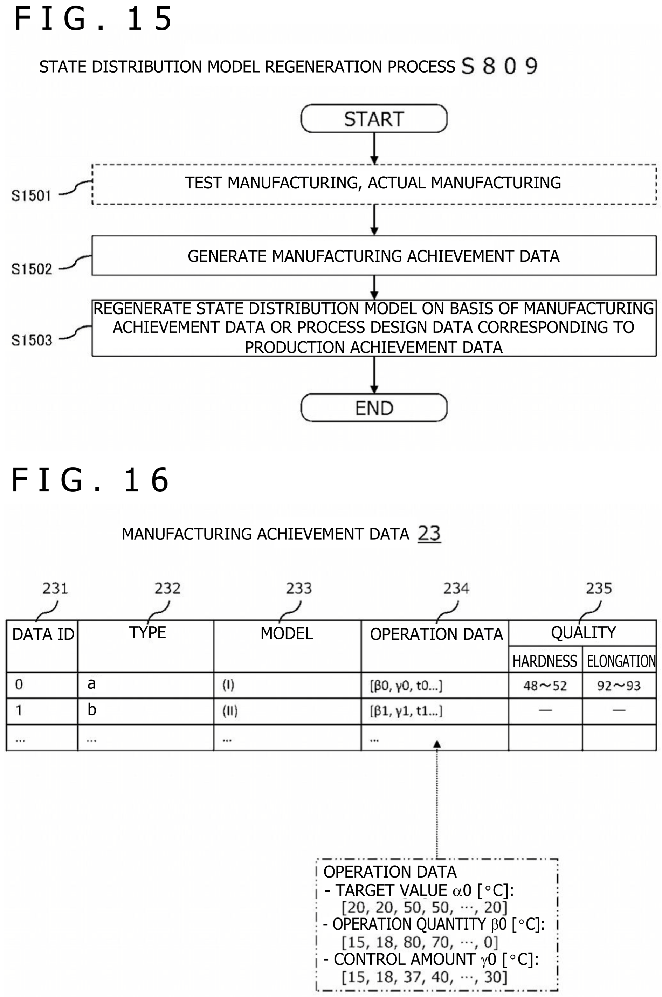

FIG. 15 is a flow chart for explaining details of the state distribution model regeneration process S809.

After the execution of the process exploration process S807, the user checks prediction values of the quality of manufactured products by referring to the process exploration screen 1400, decides process design parameters (e.g. the specifications of an apparatus at an actual plant) that should be set in a large-scale test, and performs test manufacturing or actual manufacturing of products (S1501).

Then, the process exploring section 112 records, in the following manufacturing achievement data 23, the content of manufactured products and the adopted process design parameters (S1502). For example, the process exploring section 112 may accept input of data from the user 40 or may automatically acquire data from a predetermined experiment managing system (e.g. an integrated control system (DCS) that operates the reactor 30).

(Manufacturing achievement data)

FIG. 16 is a figure depicting an example of the manufacturing achievement data 23. The manufacturing achievement data 23 stores respective pieces of data on: a data ID 231; a type 232 which represents the type of a raw material of a product; a model 233 which represents data on the specifications of an apparatus used for the manufacturing of the product; operation data 234 which represents data on operating conditions under which the manufacturing of the product has been performed; and quality 235 of the manufactured product, in association with each other.

The type 232 represents data on the combination of the composition of raw materials (proportions). The operation data 234 represents time-series data on a target value given to the control apparatus, an operation quantity given by control equipment to the process, or a control amount which is the control target in the process, for example. It is assumed in the present embodiment that the target value is the target temperature of the reactor, the operation quantity is the chilled water temperature of the jacket for temperature control, and the control amount is the temperature (i.e. state) in the reactor.

The quality 235 is not necessarily identified for each manufactured product, but represents data on only inspected products. Quality inspection values vary typically, and accordingly can be stored with a margin.

Here, in the example of the process exploration screen 1400 in FIG. 14, the range of hardness in the product quality deviates from the acceptable range set at S1301. In this case, there is a possibility that the state distribution model 108 generated in the state distribution model regeneration process S809 is untrustworthy.

In view of this, next, as depicted in FIG. 15, the process exploring section 112 corrects the process design parameters on the basis of the specifying by the user 40 or automatically (S1503).

Specifically, first, the process exploring section 112 adds, to the plant experiment data 22, the manufacturing achievement data 23 and the process design parameters associated with the manufacturing achievement data 23, and regenerates a new state distribution model 108 by retraining the state distribution model 108 on the basis of the plant experiment data 22 to which the data has been added. The process exploring section 112 executes the process exploration process S807 again on the basis of the new state distribution model 108.

Thereby, the state distribution model 108 and the precision of product quality prediction are enhanced as manufacturing is actually repeated, and the user 40 can realize appropriate design without repeating simulations by trial and error.

Next, a process of deciding process design parameters (hereinbelow, called a process design parameter second decision process) in a case where the state distribution model 108 is generated on the basis of not the CAE simulation model 109 but the plant experiment data 22 is explained.

<Process Design Parameter Decision Second Process>

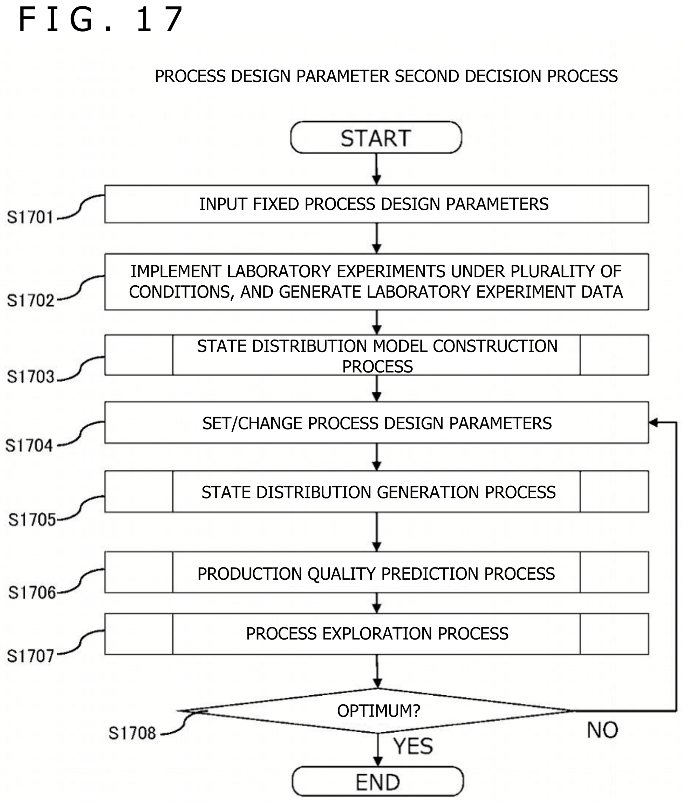

FIG. 17 is a flow chart for explaining an example of the process design parameter decision second process.

A process of S1701 is similar to that of S801 in the process design parameter decision first process.

Then, the design assistance system 1 acquires, from the reactor 30, result data (measurement data of the thermometers 51 to 55) of a plant experiment having been implemented, and stores the acquired data in the plant experiment data 22 (S1702).

The state distribution model constructing section 104 generates, in a manner similar to S803, the state distribution model 108 on the basis of the plant experiment data 22 (S1703). Processes of the subsequent S1704 to S1708 are similar to the processes of S804 to S808.

Note that the state distribution model 108 may be generated on the basis of both the CAE simulation model 109 and the plant experiment data 22. In this case, the time granularity of both types of data is aligned.

As explained above, the design assistance system 1 of the present embodiment calculates values (mean and variation) representing the state ununiformity in a reactor (specifically, a spatial area of the reactor 30 used for an experiment or a spatial area set in a coupling simulation) on the basis of the temperature at each position inside the reactor when a process is performed on raw materials distributed in the reactor, and, on the basis of the calculated values representing the ununiformity and data defining the process, generates the state distribution model 108 that receives input of process design parameters, and outputs data (mean and variation) representing the state ununiformity in the reactor after the process. Then, the design assistance system 1 acquires the values of data representing the state ununiformity in the reactor during or after the execution of the process by inputting set values of the process design parameters to the state distribution model 108, samples a plurality of possible states in the reactor from the values of the data (mean and variation) representing the ununiformity, and acquires each of quality parameters (hardness and elongation) of products by inputting, for each of the sampled states, the data on the state and the values of the process design parameters to the quality prediction model 105. Then, the design assistance system 1 changes the values of the process design parameters on the basis of each of the quality parameters such that the product quality falls within a predetermined range.

That is, the design assistance system 1 can predict each type of product quality by inputting the process design parameters and the value of data on each state sampled from random variables to the quality prediction model 105, and executing the quality prediction model 105, and decide appropriate values of the process design parameters on the basis of the data on the quality. Here, by using sampling based on random variables, for example, the state distribution in a large process space which is assumed in a large-scale test can be expressed (represented) simply and appropriately. Then, the product quality based on the state distribution is predicted using the quality prediction model 105 based on small-scale experiments, for example, and the process design parameters can be decided on the basis of the prediction.

In this manner, according to the design assistance system 1 of the present embodiment, process design for obtaining deliverables having appropriate quality in processes of generating deliverables that are implemented at different scales can be performed. Realizing such process design that quality-related KPIs are kept within a predetermined range while, for example, the number of times of experiments or simulations implemented in each process or the number of times of re-experiments at small-scale processes are kept small is enabled, this leads to a reduction in lead time for scale-up tasks.

In addition, the design assistance system 1 of the present embodiment generates the state distribution model 108 that receives input of at least any one of the composition of raw materials, the specifications of an apparatus used for a process, and operating conditions of the apparatus used for the process.

Thereby, it is possible to generate the state distribution model 108 that can appropriately predict changes in the state (temperature, etc.) distribution in the process.

In addition, the design assistance system 1 of the present embodiment stores the quality prediction model 105 related to a process performed on a smaller scale than a process related to the process design parameters in the state distribution model 108.

Thereby, in the manufacturing of products, it is possible to appropriately predict the quality of manufactured products at each experiment level even at the time of the scale-up from small-scale experiments like laboratory experiments to large-scale tests like plant experiments.

In addition, the design assistance system 1 of the present embodiment calculates the quality variation of deliverables (probability density) and the probability that the quality is within a predetermined range (defect rates) on the basis of the quality parameter of each of the states acquired on the basis of the execution of the state distribution model 108, and outputs information about the calculated probability distribution and defect rates (the graph display section 1405 on the process exploration screen 1400).

Thereby, it is possible to rightly evaluate the overall quality of mass-manufactured products.

In addition, the design assistance system 1 of the present embodiment changes the values of process design parameters such that the quality of deliverables obtained from raw materials falls within a predetermined range, and predetermined constraints (operating conditions and constraint conditions) are met on the basis of each quality parameter in each of the states acquired on the basis of the execution of the state distribution model 108, and outputs information about the range of quality of deliverables (the graph display section 1405 or the defect rate display section 1406 on the process exploration screen 1400) in a case where the values of the process design parameters are changed.

Thereby, the user 40 can grasp the quality of products that are manufactured while satisfying required constraints.

In addition, the design assistance system 1 of the present embodiment acquires the state at each position in the reactor during or after the execution of a process performed on raw material by inputting the content of the process to the coupling simulation model, calculates values (mean and variation) representing the ununiformity on the basis of the acquired state at each position inside the reactor, and generates the state distribution model 108 on the basis of the calculated values representing the ununiformity.

In this manner, the state distribution model 108 can be generated simply by generating the state distribution model 108 on the basis of execution results of the coupling simulation assuming large-scale tests and the like.

In addition, the design assistance system 1 of the present embodiment calculates values (mean and variation) representing the ununiformity on the basis of the state at each position in the reactor during or after the execution of a predetermined process (plant experiment), and generates the state distribution model 108 on the basis of the calculated values representing the ununiformity.

In this manner, the state distribution model 108 with appropriate content can be generated by generating the state distribution model 108 on the basis of actually performed large-scale tests (plant experiments).

In addition, the design assistance system 1 of the present embodiment generates the state distribution model 108 by Gaussian process regression.

Thereby, the state distribution model 108 that calculates a probability distribution that is expected to actually occur can be generated.

In addition, the design assistance system 1 of the present embodiment acquires data on the product quality after the execution of test manufacturing or actual manufacturing with the changed process design parameters, generates parameters of a new process on the basis of the acquired data on the quality, and regenerates the state distribution model 108 on the basis of the generated parameters.

In this manner, by regenerating the state distribution model 108 on the basis of manufacturing results of actual products, the state prediction precision of the state distribution model 108 can be enhanced.

In addition, the design assistance system 1 of the present embodiment further changes the values of the process design parameters set earlier on the basis of the regenerated state distribution model 108.

Thereby, for example, the state distribution model 108 and the precision of product quality prediction can be enhanced as the user 40 actually repeats the manufacturing of products, and appropriate design of the process design parameters becomes possible without repeating simulations by trial and error.

In addition, the design assistance system 1 of the present embodiment processes a process including a reaction process to be performed on raw materials.

Thereby, various reaction processes that can manufacture products can be taken into consideration.

In addition, the design assistance system 1 of the present embodiment generates a coupling simulation model including the reaction characteristics model 106 that receives input of data defining a reaction process of raw materials distributed in the reactor, and outputs a state of the raw materials at each position in the reactor during or after the execution of the reaction process.

Thereby, a coupling simulation model taking into consideration various reaction processes that can manufacture products can be generated.

In addition, the quality prediction model 105 of the present embodiment is a model that further receives input of data representing the composition of raw materials (proportions, etc.), and the design assistance system 1 acquires quality parameters of products by further inputting the data representing the composition of raw materials to the quality prediction model 105, and changes the process design parameters and the composition of raw materials.

In this manner, by treating the composition of raw materials as a parameter of each model, it is possible to optimize not only process design parameters, regarding the product quality, but also the composition of raw materials.

The present invention is not limited to the embodiment described above, but can be implemented using any constituent elements within the scope not departing from the gist. The embodiment and modification examples explained above are merely examples, and the present invention is not limited to their content unless features of the invention are impaired. In addition, although various embodiment and modification examples are explained in the description above, the present invention is not limited to their content. Other aspects that can be conceived of within the scope of the technical idea of the present invention also are included in the scope of the present invention.

For example, part of hardware included in each apparatus of the present embodiment may be provided to another apparatus.

In addition, each program of each apparatus may be provided to another apparatus, a program may include a plurality of programs, and a plurality of programs may be integrated into one program.

In addition, operating conditions other than operating conditions explained in the present embodiment may be treated as process design parameters. For example, a target value (a target temperature of a reactor, etc.) in the manufacturing achievement data 23 may be treated as a process design parameter. Operating conditions are typically defined as time-series conditions. However, since the state distribution model 108 defined by Mathematical Formula 6 or Mathematical Formula 8 can receive input of external input for each time, it is possible to include various operating conditions in process design parameters, and explore the process design parameters.

Description of Reference Characters

> 1: Design assistance system
> 105: Quality prediction model
> 106: Reaction characteristics model
> 108: State distribution model

**Claims**

1. A design assistance system (1) comprising:

   a storage apparatus that stores a quality prediction model (105) that receives input of data representing a state and data representing a process to be performed on a raw material in the state, and outputs data representing quality of a deliverable obtained from the raw material after the process; and
   a control apparatus that executes

   a state distribution model construction process of acquiring information about a state at each position in a spatial area in a case where a process has been performed on a raw material distributed in the spatial area, calculating a value representing state ununiformity in the spatial area on a basis of each acquired piece of information, and, on a basis of the calculated value representing the ununiformity and data defining the process, generating a state distribution model (108) that receives input of a process design parameter which is data defining a process to be performed on a raw material existing in a spatial area, and output data representing state ununiformity in the spatial area during or after execution of the process,
   a state distribution model execution process of setting a value of the process design parameter, and acquiring a value of data representing state ununiformity in a spatial area related to the process design parameter to which the value has been set, during or after execution of a process represented by the set value of the process design parameter, by inputting the set value of the process design parameter to the state distribution model(108),
   a manufacturing quality prediction process of identifying a plurality of possible states in the spatial area from the acquired value of the data representing the state ununiformity in the spatial area, and acquiring a quality parameter of a deliverable obtained from the raw material after the process represented by the set value of the process design parameter, by inputting, for each of the identified states, each piece of data representing the state and the set value of the process design parameter to the quality prediction model (105), and
   a parameter exploration process of changing the set value of the process design parameter, on a basis of each of the acquired quality parameters, such that the quality of the deliverable obtained from the raw material falls within a predetermined range.

2. The design assistance system (1) according to claim 1, wherein,
   the control apparatus generates, in the state distribution model construction process, a state distribution model (108) that receives, as the process design parameter, input of at least any one of a composition of the raw material, a specification of an apparatus used for the process, and an operating condition of the apparatus used for the process.

3. The design assistance system (1) according to claim 1, wherein

the storage apparatus stores a quality prediction model (105) related to a process performed on a smaller scale than a process related to the process design parameter in the state distribution model (108).

4.  The design assistance system (1) according to claim 1, wherein,
    the control apparatus calculates, in the parameter exploration process, variation in quality of the deliverable and probability that the quality is within a predetermined range on a basis of the acquired quality parameter of each of the states, and outputs information about the calculated variation and probability.

5.  The design assistance system (1) according to claim 1, wherein,
    the control apparatus changes, in the parameter exploration process, the set value of the process design parameter, on a basis of the acquired quality parameter of each of the states, such that the quality of the deliverable obtained from the raw material falls within a predetermined range and a predetermined constraint is met, and outputs information about a range of the quality of the deliverable in a case where the value of the process design parameter is changed.

6.  The design assistance system (1) according to claim 1, wherein

    the storage apparatus stores a spatial process model that receives input data defining a process to be performed on a raw material distributed in a spatial area, and outputs a state at each position in the spatial area during or after execution of the process, and
    the control apparatus executes

    a spatial process model executing section of setting content of a process to be performed on a raw material distributed in a spatial area, and acquiring a state at each position in the spatial area during or after execution of the set process by inputting the set content of the process to the spatial process model, and
    a state distribution model construction process of calculating a value representing the ununiformity on a basis of the acquired state at each position in the spatial area, and generates the state distribution model (108) on a basis of the calculated value representing the ununiformity and data representing the content of the process input to the spatial process model.

7.  The design assistance system (1) according to claim 1, wherein

    the design assistance system (1) further includes a container that has a predetermined spatial area and allows a predetermined process to be performed on a raw material under a predetermined condition, and
    the control apparatus calculates, in the state distribution model construction process, the value representing the ununiformity on a basis of a state at each position in the spatial area of the container during or after execution of the predetermined process, and generates the state distribution model (108) on a basis of the calculated value representing the ununiformity and data representing content of the predetermined process.

8.  The design assistance system (1) according to claim 1, wherein,
    the control apparatus generates, in the state distribution model construction process, the state distribution model (108) by Gaussian process regression.

9.  The design assistance system (1) according to claim 1, wherein,

    the control apparatus, in the state distribution model construction process,
    acquires data on the quality of the deliverable obtained by causing a process represented by the changed process design parameter to be performed on the raw material, generates new data defining the performed process on a basis of the acquired data on the quality, and regenerates the state distribution model (108) on a basis of the generated new data and the calculated value representing the ununiformity.

10. The design assistance system (1) according to claim 9, wherein
    the control apparatus further changes the set value of the process design parameter on a basis of the regenerated state distribution model (108).

11. The design assistance system (1) according to claim 1, wherein
    the process includes a reaction process to be performed on the raw material.

12. The design assistance system (1) according to claim 6, wherein

the control apparatus executes a spatial process model construction process of generating a spatial process model that receives input of data defining a reaction process of a raw material distributed in a spatial area, and outputs a state of the raw material at each position in the spatial area during or after execution of the reaction process.

13. The design assistance system (1) according to claim 1, wherein

the storage apparatus stores a quality prediction model (105) that further receives input of data representing a composition of the raw material, and
the control apparatus

acquires, in the manufacturing quality prediction process, a quality parameter of the deliverable for each of the states by further inputting, for the state, the data representing the composition of the raw material to the quality prediction model (105); and
changes, in the parameter exploration process, the set value of the process design parameter and the composition of the raw material.

14. A design assistance method performed by an information processing apparatus including a control apparatus and a storage apparatus that stores a quality prediction model (105) that receives input of data representing a state and data representing a process to be performed on a raw material in the state, and outputs data representing quality of a deliverable obtained from the raw material after the process,
the control apparatus executing:

a state distribution model construction process of acquiring information about a state at each position in a spatial area in a case where a process has been performed on a raw material distributed in the spatial area, calculating a value representing state ununiformity in the spatial area on a basis of each acquired piece of information, and, on a basis of the calculated value representing the ununiformity, and data defining the process, generating a state distribution model (108) that receives input of a process design parameter which is data defining a process to be performed on a raw material existing in a spatial area, and output data representing state ununiformity in the spatial area after the process;
a state distribution model execution process of setting a value of the process design parameter, and acquiring a value of data representing state ununiformity in a spatial area related to the process design parameter to which the value has been set, after a process represented by the set value of the process design parameter, by inputting the set value of the process design parameter to the state distribution model (108);
a manufacturing quality prediction process of identifying a plurality of possible states in the spatial area from the acquired value of the data representing the state ununiformity in the spatial area, and acquiring, for each of the identified states, a quality parameter of a deliverable obtained from the raw material after the process represented by the set value of the process design parameter by inputting, for the state, each piece of data representing the state and the set value of the process design parameter to the quality prediction model (105); and
a parameter exploration process of changing the set value of the process design parameter, on a basis of each of the acquired quality parameters, such that the quality of the deliverable obtained from the raw material falls within a predetermined range.

F I G . 1

# F I G . 2

LABORATORY EXPERIMENT DATA <u>21</u>

EP 4 653 969 A1

| EXPER-IMENT ID | EXPERIMENTAL CONDITION | | | REACTION CHARACTERISTICS | | | QUALITY | |
|---|---|---|---|---|---|---|---|---|
| | RAW MATERIAL PROPORTION | REACTION TEMPERATURE | REACTION TIME | REACTION RATE | REACTION HEAT | VISCOSITY | HARDNESS | ELONG-ATION |
| a | {A: 0.1, B: 0.9} | 40℃±2℃ | 20min | 0.1wt/m3・s | 60J/mol | 0.001Pa・s | 99 | 45 |
| b | {A: 0.1, B: 0.9} | 80℃±1℃ | 40min | 0.2wt/m3・s | 50J/mol | 0.001Pa・s | 47 | 92 |
| … | … | … | | … | … | … | … | … |

211  212  213  214

FIG. 3

EXAMPLE OF PLANT EXPERIMENT

# F I G . 4

PLANT EXPERIMENT DATA <u>22</u>

| DATA ID | FACILITY SPECIFICATIONS | | | | | | RAW MATERIAL PROPORTION | EXPERIMENTAL RESULT |
|---|---|---|---|---|---|---|---|---|
| | SHAPE | RADIUS | HEIGHT | AGITATOR BLADE SHAPE | AGITATOR BLADE AREA | HEAT REMOVAL SCHEME | | |
| 1 | CYLINDRICAL | 5m | 2m | PROPELLER | 0.5m2 | JACKET | {A: 0.2, B: 0.8} | β1 |
| 2 | CYLINDRICAL | 10m | 4m | PADDLE | 1.5m2 | JACKET | {A: 0.3, B: 0.7} | β2 |
| ... | ... | ... | ... | ... | ... | ... | ... | ... |

221    222    223    224

| TIME t[s] | SENSOR ID | TEMPERATURE [K] |
|---|---|---|
| 0 | #1 | 295 |
| ... | ... | ... |
| 0 | #5 | 295 |
| 1 | #1 | 296 |
| ... | ... | ... |
| 1 | #5 | 294 |
| ... | ... | ... |

EP 4 653 969 A1

# FIG. 5

CAE SIMULATION DATA 107

1071      1072      1073      1074

| DATA ID | EQUIPMENT/FACILITY SPECIFICATIONS | | | | | | RAW MATERIAL PROPORTION | SIMULATION RESULT |
|---|---|---|---|---|---|---|---|---|
| | SHAPE | RADIUS | HEIGHT | AGITATOR BLADE SHAPE | AGITATOR BLADE AREA | HEAT REMOVAL SCHEME | | |
| 1 | CYLINDRICAL | 5m | 2m | PROPELLER | 0.5m2 | JACKET | {A: 0.2, B: 0.8} | α1 |
| 2 | CYLINDRICAL | 10m | 4m | PADDLE | 1.5m2 | JACKET | {A: 0.3, B: 0.7} | α2 |
| ... | ... | ... | ... | ... | ... | ... | ... | ... |

| TIME t[s] | POSITION | | | FLOW RATE | | | TEMPERATURE [K] | VISCOSITY [Pa·S] |
|---|---|---|---|---|---|---|---|---|
| | x [m] | y [m] | z [m] | ux [m/s] | uy [m/s] | uz [m/s] | | |
| 0 | 0 | 0 | 0 | 0 | 0 | 0 | 295 | 0.001 |
| ... | ... | ... | ... | ... | ... | ... | ... | ... |
| 0 | 10 | 10 | 10 | 0 | 0 | 0 | 295 | 0.001 |
| 0.0001 | 0 | 0 | 0 | 0.05 | 0.08 | 0.01 | 296 | 0.002 |
| ... | ... | ... | ... | ... | ... | ... | ... | ... |
| 0.0001 | 10 | 10 | 10 | 0.07 | 0.02 | 0.001 | 294 | 0.003 |
| ... | ... | ... | ... | ... | ... | ... | ... | ... |

EP 4 653 969 A1

# FIG. 6

STATE DISTRIBUTION MODEL DATABASE <u>115</u>

| MODEL ID | TRAINING DATA SOURCE | TRAINING DATA ID | MODEL DATA |
|---|---|---|---|
| 1151 | 1152 | 1153 | 1154 |
| 1 | CAE SIMULATION | {1, 4, 5, …} | M1 |
| 2 | PLANT EXPERIMENT | … | … |
| … | … | … | … |

# FIG. 7

FIG. 8

PROCESS DESIGN PARAMETER FIRST DECISION PROCESS

```
                    START
                      │
                      ▼
S801   INPUT FIXED PROCESS DESIGN PARAMETERS
                      │
                      ▼
S802   IMPLEMENT CAE SIMULATION UNDER PLURALITY OF
       CONDITIONS, AND GENERATE CAE SIMULATION DATA
                      │
                      ▼
S803   STATE DISTRIBUTION MODEL
       CONSTRUCTION PROCESS
                      │
                      ▼
S804   SET/CHANGE PROCESS DESIGN PARAMETERS ◄──┐
                      │                          │
                      ▼                          │
S805   STATE DISTRIBUTION GENERATION PROCESS     │
                      │                          │
                      ▼                          │
S806   MANUFACTURING QUALITY PREDICTION PROCESS  │
                      │                          │
                      ▼                          │
S807   PROCESS EXPLORATION PROCESS               │
                      │                          │
                      ▼                          │
                  OPTIMUM?                       │
S808       YES ◄────┘ └────► NO ────────────────┘

       S809   STATE DISTRIBUTION MODEL
              REGENERATION PROCESS
                      │
                      ▼
                     END
```

# FIG. 9 STATE DISTRIBUTION MODEL CONSTRUCTION SCREEN 1200

EP 4 653 969 A1

# FIG. 10

STATE DISTRIBUTION MODEL CONSTRUCTION PROCESS S803

```
                            ┌──────────┐
                            │  START   │
                            └──────────┘
                                 │
                                 ▼
S901  ┌──────────────────────────────────────────────────────────────┐
      │                     EXTRACT TARGET DATA                        │
      └──────────────────────────────────────────────────────────────┘
                                 │
                                 ▼
S902  ┌──────────────────────────────────────────────────────────────┐
      │                       SELECT DATA                             │◄──┐
      └──────────────────────────────────────────────────────────────┘   │
                                 │                                         │
                                 ▼                                         │
S903  ┌──────────────────────────────────────────────────────────────┐   │
      │ PERFORM RANDOM SAMPLING IN SPATIAL DIRECTION TO GENERATE       │   │
      │ STATE OF EACH TIME, AND CONSTRUCT TRAINING DATA               │   │
      └──────────────────────────────────────────────────────────────┘   │
                                 │                                         │
                                 ▼                                         │
S904  ┌──────────────────────────────────────────────────────────────┐   │
      │ IDENTIFY SELECTED DATA AS STOCHASTIC PROCESS, AND GENERATE     │   │
      │ STOCHASTIC PROCESS MODEL BY GAUSSIAN PROCESS REGRESSION        │   │
      └──────────────────────────────────────────────────────────────┘   │
                                 │                                         │
                                 ▼                                         │
S905              ◇ ENTIRE DATA SELECTED? ◇ ─── NO ─────────────────────────┘
                                 │
                                YES
                                 ▼
S906  ┌──────────────────────────────────────────────────────────────┐
      │        IDENTIFY FUNCTIONS f AND g OF STATE DISTRIBUTION MODEL   │
      └──────────────────────────────────────────────────────────────┘
                                 │
                                 ▼
                            ┌──────────┐
                            │   END    │
                            └──────────┘
```

EP 4 653 969 A1

# FIG. 11

STATE DISTRIBUTION GENERATION PROCESS S805

START

S1001 — ACQUIRE EXTERNAL INPUTS $\theta_0$, ..., $\theta_N$

S1002 — SET INITIAL VALUE $\mu_{Td-1,d}$, $V_{Td-1,d}$

S1003 — INTEGRATE STATE DISTRIBUTION MODEL OVER TIME

END

# F I G . 1 2

MANUFACTURING QUALITY PREDICTION PROCESS S806

START

S1101 — SET NUMBER OF TIMES OF SAMPLING Ns

S1102 — SET SAMPLE TIME POINTS (NUMBER OF POINTS: Nt)

S1103 — $i=1$

S1104 — PERFORM RANDOM SAMPLING FROM STATE DISTRIBUTION AT SAMPLE TIME POINTS

S1105 — $j=1$

S1112 — $i=i+1$

S1106 — INPUT STATE SAMPLED AT j-TH TIME POINT TO QUALITY PREDICTION MODEL

S1107 — STORE OUTPUT QUALITY $Q = [q_1, q_2, ...]^T$

S1111 — $j=j+1$

S1108 — $j<Nt$

S1109 — $i<Ns$

S1110 — OUTPUT DISTRIBUTIONS OF RESPECTIVE TYPES OF QUALITY $q_1, q_2, ...$

END

# FIG. 13

PROCESS EXPLORATION PROCESS S807

```
                        ┌─────────┐
                        │  START  │
                        └─────────┘
                             │
                             ▼
S1301  ┌──────────────────────────────────────────────────────────────┐
       │ ACQUIRE ACCEPTABLE RANGES OF RESPECTIVE TYPES OF QUALITY      │
       │ $q_1$, $q_2$, ...                                            │
       └──────────────────────────────────────────────────────────────┘
                             │
                             ▼
S1302  ┌──────────────────────────────────────────────────────────────┐
       │ COMPUTE RATIOS (DEFECT RATES) OF RESPECTIVE TYPES OF QUALITY  │
       │ THAT FALL OUTSIDE ACCEPTABLE RANGES                          │
       └──────────────────────────────────────────────────────────────┘
                             │
                             ▼
S1303  ┌──────────────────────────────────────────────────────────────┐
       │ CHANGE EXTERNAL INPUTS $\theta_0$, $\theta_1$, ... IN        │
       │ DIRECTION OF DECREASE OF EVALUATION FUNCTION INCLUDING        │
       │ DEFECT RATES WHILE MEETING CONSTRAINT CONDITIONS OF PLANT     │
       └──────────────────────────────────────────────────────────────┘
                             │
                             ▼
                        ┌─────────┐
                        │   END   │
                        └─────────┘
```

# F I G . 1 4

PROCESS EXPLORATION SCREEN <u>1400</u>

## ACCEPTABLE RANGE INPUT SECTION

| ITEM | LOWER LIMIT | UPPER LIMIT |
|---|---|---|
| HARDNESS $q_1$ | 50 | 60 |
| ELONGATION $q_2$ | 90 | 99 |

1401

## OBJECTIVE FUNCTION DEFINING SECTION ‑1402

$$J = aP(q_1) + bP(q_2)$$

## CONSTRAINT CONDITION DEFINING SECTION

| ITEM | LOWER LIMIT | UPPER LIMIT |
|---|---|---|
| TEMPERATURE T | 40 | 90 |

1403

EXPLORE PROCESS ‑1404

## QUALITY DISTRIBUTION

HARDNESS $q_1$

ELONGATION $q_2$

1408 — 1405

## DEFECT RATE

| ITEM | DEFECT RATE |
|---|---|
| HARDNESS $q_1$ | 0.01 |
| ELONGATION $q_2$ | 0.02 |

1406

## DESIGN PARAMETER EXPLORATION RESULTS

| REACTOR RADIUS | REACTOR HEIGHT | AGITATOR BLADE AREA |
|---|---|---|
| 6.5m | 5m | 2m2 |

1407

EP 4 653 969 A1

# F I G . 1 5

STATE DISTRIBUTION MODEL REGENERATION PROCESS S 8 0 9

```
                    ┌──────────────┐
                    │    START     │
                    └──────────────┘
                            │
                            ▼
S1501  ┌ ─ ─ ─ ─ ─ ─ ─ ─ ─ ─ ─ ─ ─ ─ ─ ─ ─ ─ ─ ─ ─ ─ ┐
       │   TEST MANUFACTURING, ACTUAL MANUFACTURING   │
       └ ─ ─ ─ ─ ─ ─ ─ ─ ─ ─ ─ ─ ─ ─ ─ ─ ─ ─ ─ ─ ─ ─ ┘
                            │
                            ▼
S1502  ┌──────────────────────────────────────────────┐
       │    GENERATE MANUFACTURING ACHIEVEMENT DATA    │
       └──────────────────────────────────────────────┘
                            │
                            ▼
       ┌──────────────────────────────────────────────┐
       │ REGENERATE STATE DISTRIBUTION MODEL ON BASIS  │
S1503  │ OF MANUFACTURING ACHIEVEMENT DATA OR PROCESS  │
       │ DESIGN DATA CORRESPONDING TO PRODUCTION       │
       │ ACHIEVEMENT DATA                              │
       └──────────────────────────────────────────────┘
                            │
                            ▼
                    ┌──────────────┐
                    │     END      │
                    └──────────────┘
```

# F I G . 1 6

MANUFACTURING ACHIEVEMENT DATA 23

| 231 | 232 | 233 | 234 | 235 | |
|---|---|---|---|---|---|
| DATA ID | TYPE | MODEL | OPERATION DATA | QUALITY | |
| | | | | HARDNESS | ELONGATION |
| 0 | a | (I) | [β0, γ0, t0...] | 48〜52 | 92〜93 |
| 1 | b | (II) | [β1, γ1, t1...] | — | — |
| ... | ... | ... | ... | | |

```
┌ ─ ─ ─ ─ ─ ─ ─ ─ ─ ─ ─ ─ ─ ─ ─ ─ ─ ─ ─ ─ ┐
  OPERATION DATA
  - TARGET VALUE α0 [°C]:
      [20, 20, 50, 50, ···, 20]
  - OPERATION QUANTITY β0 [°C]:
      [15, 18, 80, 70, ···, 0]
  - CONTROL AMOUNT γ0 [°C]:
      [15, 18, 37, 40, ···, 30]
└ ─ ─ ─ ─ ─ ─ ─ ─ ─ ─ ─ ─ ─ ─ ─ ─ ─ ─ ─ ─ ┘
```

# FIG. 17

PROCESS DESIGN PARAMETER SECOND DECISION PROCESS

START

S1701 — INPUT FIXED PROCESS DESIGN PARAMETERS

S1702 — IMPLEMENT LABORATORY EXPERIMENTS UNDER PLURALITY OF CONDITIONS, AND GENERATE LABORATORY EXPERIMENT DATA

S1703 — STATE DISTRIBUTION MODEL CONSTRUCTION PROCESS

S1704 — SET/CHANGE PROCESS DESIGN PARAMETERS

S1705 — STATE DISTRIBUTION GENERATION PROCESS

S1706 — PRODUCTION QUALITY PREDICTION PROCESS

S1707 — PROCESS EXPLORATION PROCESS

S1708 — OPTIMUM?

NO

YES

END

## INTERNATIONAL SEARCH REPORT

| International application No. |
|---|
| **PCT/JP2024/016704** |

---

**A. CLASSIFICATION OF SUBJECT MATTER**

**G05B 23/02**(2006.01)i
FI: G05B23/02 R

According to International Patent Classification (IPC) or to both national classification and IPC

**B. FIELDS SEARCHED**

Minimum documentation searched (classification system followed by classification symbols)

G05B23/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2022-500778 A (BAYER AKTIENGESELLSCHAFT) 04 January 2022 (2022-01-04) | 1-14 |
| A | JP 2022-92297 A (SHOWA DENKO MATERIALS CO., LTD.) 22 June 2022 (2022-06-22) | 1-14 |
| A | JP 2019-152986 A (THE NATIONAL INSTITUTE OF ADVANCED INDUSTRIAL SCIENCE AND TECHNOLOGY) 12 September 2019 (2019-09-12) | 1-14 |

---

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **10 July 2024** | **23 July 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/016704**

| Patent document cited in search report | | | Publication date (day/month/year) | Patent family member(s) | | | Publication date (day/month/year) |
|---|---|---|---|---|---|---|---|
| JP | 2022-500778 | A | 04 January 2022 | US | 2022/0068440 | A1 | |
| | | | | WO | 2020/058237 | A2 | |
| | | | | EP | 3853858 | A2 | |
| | | | | CN | 112714935 | A | |
| | | | | KR | 10-2021-0060467 | A | |
| | | | | AU | 2019344557 | A1 | |
| | | | | CA | 3112860 | A1 | |
| | | | | IL | 281435 | A | |
| | | | | BR | 112021003828 | A2 | |
| | | | | SG | 11202102308V | A | |
| JP | 2022-92297 | A | 22 June 2022 | US | 2024/0028795 | A1 | |
| | | | | WO | 2022/124075 | A1 | |
| | | | | EP | 4246363 | A1 | |
| | | | | CN | 116601635 | A | |
| | | | | KR | 10-2023-0113571 | A | |
| JP | 2019-152986 | A | 12 September 2019 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023090509 A

**Non-patent literature cited in the description**

- **MANABU KANO** ; **RYOSUKE YOSHIZAKI**. Combined Task Bayesian Optimization for Scale-Up of Manufacturing Process. *Chemical engineering of Japan*, 2016, vol. 80 (12), 769-772